# EUROPEAN PATENT SPECIFICATION

(11) **EP 3 372 481 B1**
(45) Date of publication and mention of the grant of the patent: **26.08.2020**
(21) Application number: 18160496.8
(22) Date of filing: 07.03.2018
(51) Int. Cl.: B62K 5/027, B62K 5/05, B62K 5/08, B62K 5/10, B62K 19/20, B62K 5/02, B62K 19/32

(54) **VEHICLE**
FAHRZEUG
VÉHICULE

(30) Priority: 07.03.2017 JP 2017042842
(43) Date of publication of application: 12.09.2018
(73) Proprietor: Yamaha Hatsudoki Kabushiki Kaisha, Iwata-shi Shizuoka 438-8501 (JP)
(72) Inventor: MITSUOKA, Ryuta, Iwata-shi, Shizuoka 438-8501 (JP)
(74) Representative: Grünecker Patent- und Rechtsanwälte PartG mbB

(56) References cited:
- EP-A2- 3 069 979
- EP-B1- 1 227 966
- CN-B- 102 092 434
- CN-U- 201 670 311
- JP-U- H0 313 294
- US-A1- 2008 258 422
- US-A1- 2014 375 015

## Description

The present invention relates to a vehicle according to the preamble of the independent claim 1. Such a vehicle can be taken from the prior art document EP 3 069 979 A2 and includes a body frame that can lean and two front wheels that are aligned side by side in a left-and-right direction.

Non-Patent Document 1 describes a vehicle including a body frame that can lean and a right front wheel and a left front wheel that are aligned side by side in a left and right direction. This vehicle leans to the right of the vehicle when it turns to the right and leans to the left of the vehicle when it turns to the left. This vehicle includes a link mechanism.

The link mechanism includes an upper cross member and a lower cross member. The link mechanism also includes a right side member that is connected to right portions of the upper cross member and the lower cross member, and a left side member that is connected to left portions of the upper cross member and the lower cross member. Middle portions of the upper cross member and the lower cross member are supported on the body frame. The upper cross member and the lower cross member are supported on a link supporting portion of the body frame so as to turn about axes that extend substantially in a front-and-rear direction of the body frame.

The upper cross member and the lower cross member turn relative to the body frame as the body frame leans, whereby positions of the right front wheel and the left front wheel change relative to each other in an up-and-down direction of the body frame. With the vehicle remaining in an upright state, the upper cross member and the lower cross member are provided above the right front wheel and the left front wheel in relation to the up-and-down direction of the body frame.

This link mechanism supports the right front wheel and the left front wheel so as to move in the up-and-down direction of the body frame. The link mechanism supports the right front wheel so as to turn about a right steering axis that extends in the up-and-down direction of the body frame and supports the left front wheel so as to turn about a left steering axis that is parallel to the right steering axis.

### [Non-Patent Document]

[Non-Patent Document 1] Catalogo parti di ricambio, MP3 300 ie LT Mod. ZAPM64102, Piaggio

In vehicles like the one described above, there is a situation where forces different in magnitude are exerted on a right front wheel and a left front wheel. For example, forces different in magnitude are exerted on the right front wheel and the left front wheel in such a situation that the right front wheel enters a pool while the left front wheel does not enter the pool. Alternatively, forces different in magnitude are exerted on the right front wheel and the left front wheel in such a state that the right front wheel rides on a piece of stone while the left front wheel remains in contact with a flat road surface.

For example, when a frictional force inputted into the right front wheel from a road surface is greater than a frictional force inputted into the left front wheel from a road surface in braking to slow down or stop the vehicle, a clockwise torsional moment is exerted on an upper cross member and a lower cross member when seen from above the vehicle. This torsional moment is transmitted to a link supporting portion which supports the upper cross member and the lower cross member.

The link supporting portion of the vehicle described in Non-Patent Document 1 above has a pipe-shaped main pipe portion and a boss portion of a frustum of circular cone having an apex portion and a base portion. The cross members are attached rotatably on the apex portion of the boss portion. The base portion of the boss portion that is greater in diameter than the apex portion is welded to the main pipe portion.

The twisting of the cross members is transmitted to the main pipe portion by way of the boss portion. When the twisting of the cross member is transmitted to the main pipe portion, stress is concentrated on a welding portion where the boss portion and the main pipe portion are welded together. In the vehicle described in Non-Patent Document 1 above, the stress concentrated on to the welding portion between the boss portion and the main pipe portion is mitigated when compared with a case where a cylindrical boss portion is used since the base portion is greater in diameter than the apex portion.

Incidentally, it has been found out that the link supporting portion of the vehicle described in Non-Patent Document 1 above is also enlarged in diameter for welding the base portion which is enlarged in diameter due to the boss portion having the shape of a frustum of circular cone being used.

Then, an object of the invention is to provide a vehicle which restricts an enlargement in size thereof.

According to the present invention said object is solved by a vehicle having the features of independent claim 1. Preferred embodiments are laid down in the dependent claims.

A vehicle according to the present teaching provides the following. (1) A vehicle having:
a body frame configured to lean to the right of the vehicle when the vehicle turns to the right and lean to the left of the vehicle when the vehicle turns to the left;
a right front wheel configured to turn about a right steering axis that extends in an up-and-down direction of the body frame;
a left front wheel provided on the left of the right front wheel in a left-and-right direction of the body frame and configured to turn about a left steering axis that is parallel to the right steering axis;
a right shock absorbing mechanism supporting the right front wheel at a lower portion and configured to absorb a displacement of the right front wheel towards an upper portion thereof in the up-and-down direction of the body frame;
a left shock absorbing mechanism supporting the left front wheel at a lower portion and configured to absorb a displacement of the left front wheel towards an upper portion thereof in the up-and-down direction of the body frame; and
a link mechanism supporting the right front wheel and the left front wheel so as to be displaced relative to each other in the up-and-down direction of the body frame,
wherein the link mechanism has:
   a right side member supporting an upper portion of the right shock absorbing mechanism so as to turn about the right steering axis;
   a left side member supporting an upper portion of the left shock absorbing mechanism so as to turn about the left steering axis;
   an upper cross member supporting an upper portion of the right side member at a right end portion thereof so as to turn about a right upper axis that extends in a front-and-rear direction of the body frame and an upper portion of the left side member at a left end portion thereof so as to turn about a left upper axis that is parallel to the right upper axis and supported on the body frame at a middle portion thereof so as to turn about a middle upper axis that is parallel to the right upper axis and the left upper axis; and
   a lower cross member supporting a lower portion of the right side member at a right end portion thereof so as to turn about a right lower axis that is parallel to the right upper axis and a lower portion of the left side member at a left end portion thereof so as to turn about a left lower axis that is parallel to the left upper axis and supported on the body frame at a middle portion thereof so as to turn about a middle lower axis that is parallel to the middle upper axis,
   wherein the body frame has:
      a main frame extending in at least a front-and-rear direction of the vehicle for supporting a part that is to be mounted on the vehicle;
      a link supporting portion provided ahead of the main frame in relation to the front-and-rear direction of the vehicle for supporting the upper cross member and the lower cross member so as to turn; and
      a connecting bracket configured to connect a front portion of the main frame and the link supporting portion together,
      wherein the connecting bracket has:
         a turning supporting portion connected to the link supporting portion for supporting at least one of the upper cross member and the lower cross member so as to turn about the middle upper axis or the middle lower axis;
         a connecting portion configured to connect the front portion of the main frame and the link supporting portion by at least a portion thereof above or below the turning supporting portion in the up-and-down direction of the body frame; and
         a right reinforcement wall portion and a left reinforcement wall portion that are provided on the right and left of a center axis of the turning supporting portion, respectively, at least portions thereof in the left-and-right direction of the body frame and extend in the up-and-down direction so as to connect the turning supporting portion and the connecting portion together, and
         wherein the connecting bracket including the turning supporting portion, the connecting portion, the right reinforcement wall portion and the left reinforcement wall portion is a monolithic part.

According to the vehicle of the present teaching, the turning supporting portion is formed as the connecting bracket which is monolithic with the connecting portion that is connected to the main frame. This enables part of torsional moment inputted into the turning supporting portion to be transmitted to the main frame by way of the connecting bracket. This reduces the torsional moment that is transmitted from the turning supporting portion to the link supporting portion, whereby stress inputted into the welding portion between the link supporting portion and the turning supporting portion is reduced.

Further, the turning supporting portion, the connecting portion, the right reinforcement wall portion and the left reinforcement wall portion are integrated into the monolithic part. The torsional moment inputted into the turning supporting portion is dispersed not only to the welding portion between the turning supporting portion and the link supporting portion but also to the right reinforcement wall portion and the left reinforcement wall portion that are provided on the right and left of the turning supporting portion, respectively, for transmission to the link supporting portion. This reduces the stress that is concentrated on to the welding portion between the turning supporting portion and the link supporting portion.

Due to the reasons described above, the stress concentrated on the welding portion between the turning supporting portion and the link supporting portion is reduced. It becomes easy to ensure a sufficient connecting strength between the turning supporting portion and the link supporting portion without using the large diameter link supporting portion by forming the turning supporting portion into the shape of a frustum of circular cone as done in Non-Patent Document 1. This makes it difficult for the link supporting portion to be enlarged in diameter, thereby suppressing the enlargement in size of the vehicle.

In the vehicle according to the present teaching described above, the turning supporting portion may support the lower cross member so as to turn, and the right reinforcement wall portion and the left reinforcement wall portion may connect the connecting portion that is provided below the turning supporting portion to the turning supporting portion together.

In many occasions, torsional force inputted into the lower cross member is greater than torsional force inputted into the upper cross member. Although great torsional force is inputted from the lower cross member to the link supporting portion, the present teaching described above can preferably reduce stress that is inputted into the welding portion between the link supporting portion and the turning supporting portion. This suppresses the enlargement in diameter of the lower portion of the link supporting portion, thereby making it possible to suppress the enlargement in size of the vehicle.

In the vehicle according to the present teaching described above, a rear portion of the right reinforcement wall portion and a rear portion of the left reinforcement wall portion may be connected together at a rear reinforcement wall portion.

According to the vehicle of the present teaching, connecting the rear portion of the right reinforcement wall portion and the rear portion of the left reinforcement wall portion by the rear reinforcement wall portion can enhance the strength of the connecting bracket.

In the vehicle according to the present teaching described above, the rear reinforcement wall portion may be monolithic with the connecting bracket, and a first space that opens forwards may be formed by the turning supporting portion, the right reinforcement wall portion, the left reinforcement wall portion, the rear reinforcement wall portion and the connecting portion, and a welding portion between the connecting bracket and the link supporting portion may be provided to surround an opening of the first space in such a way that the opening of the first space is closed by the link supporting portion.

According to the vehicle of the present teaching, forming the first space in the interior of the connecting bracket can reduce the weight of the connecting bracket. In addition, providing the welding portion so as to surround the opening portion of the first space can ensure the large welding area, thereby making it easy to enhance the welding strength between the connecting bracket and the link supporting portion.

In the vehicle according to the present teaching described above, the lower cross member may have a lower front cross element provided ahead of the link supporting portion and a lower rear cross element provided behind the link supporting portion and connected to the lower front cross element, and the turning supporting portion may support the lower rear cross element so as to turn about the middle lower axis.

In many occasions, torsional force inputted into the lower cross member is greater than torsional force inputted into the upper cross member. Although great torsional force is inputted from the lower cross member to the link supporting portion, the present teaching described above can preferably reduce stress that is inputted into the welding portion between the link supporting portion and the turning supporting portion. This suppresses the enlargement in diameter of the lower portion of the link supporting portion, thereby making it possible to suppress the enlargement in size of the vehicle.

In the vehicle according to the present teaching described above, the main frame may have: a right frame extending in at least the front-and-rear of the vehicle; and a left frame extending in at least the front-and-rear direction of the vehicle and positioned on the left of the right frame in a left-and-right direction of the vehicle, the right reinforcement wall may be positioned on the left of a front end of the right frame in the left-and-right direction of the vehicle, and the left reinforcement wall portion may be positioned on the right of a front end of the left frame in the left-and-right direction of the vehicle.

According to the vehicle of the present teaching, the right reinforcement wall portion and the left reinforcement wall portion can be disposed so as to lie near the upper cross member or the lower cross member while avoiding the interference with the upper cross member and the lower cross member, thereby making it easy to suppress the enlargement in size of the vehicle.

In the vehicle according to the present teaching described above, the rear portion of the right reinforcement wall portion and the rear portion of the left reinforcement wall portion may be connected by the rear reinforcement wall portion, the connecting portion may have: a right wall portion connecting a front portion of the right frame to the right reinforcement wall portion together; a left wall portion connecting a front portion of the left frame to the left reinforcement wall portion together; a rear wall portion connecting the front portion of the right frame to the front portion of the left frame together; and a lower wall portion connecting a lower portion of the right wall portion, a lower portion of the left wall portion and a lower portion of the rear wall portion together or an upper wall portion connecting an upper portion of the right wall portion, an upper portion of the left wall portion and an upper portion of the rear wall portion together, and a second space that opens upwards or downwards may be formed by the rear reinforcement wall portion, the right wall portion, the left wall portion, the rear wall portion and the lower wall portion or the upper wall portion.

According to the vehicle of the present teaching, forming the second space in the interior of the connecting bracket can reduce the weight of the connecting bracket.

In the vehicle according to the present teaching described above, a front portion of the right wall portion may be positioned on the left of a rear portion thereof, and a front portion of the left wall portion may be positioned on the right of a rear portion thereof when the vehicle is seen from thereabove.

According to the vehicle of the present teaching, the right reinforcement wall portion and the left reinforcement wall portion can be disposed so as to lie near the cross member while avoiding the interference therewith, thereby making it easy to suppress the enlargement in size of the vehicle.

In the vehicle according to the present teaching described above, the right frame may have: a right upper frame extending in at least the front-and-rear direction of the vehicle; and a right lower frame provided below the right upper frame and extending in the front-and-rear direction of the vehicle, the left frame may have: a left upper frame extending in at least the front-and-rear direction of the vehicle; and a left lower frame provided below the left upper frame and extending in the front-and-rear direction of the vehicle, a front portion of the right upper frame and a front portion of the left upper frame may be connected to an upper portion of the link supporting portion via an upper bracket, the upper bracket may have a right upper insertion hole into which the front portion of the right upper frame is inserted and a left upper insertion hole into which a front portion of the left upper frame is inserted, the connecting bracket may have a right lower insertion hole into which a front portion of the right lower frame is inserted and a left lower insertion hole into which a front portion of the left lower frame is inserted, and the upper bracket and the connecting bracket may be connected together by a right vertical connecting frame extending in the up-and-down direction of the body frame and a left vertical connecting frame extending in the up-and-down direction of the body frame and provided on the left of the right vertical connecting frame.

According to the vehicle of the present teaching, the connecting strength of the upper bracket and the connecting bracket is enhanced by the right vertical connecting frame and the left vertical connecting frame, thereby making it easy to fix relative positions thereof to the right upper insertion hole, the left upper insertion hole, the right lower insertion hole and the left lower insertion hole. This enhances the working efficiency in inserting the respective front portions of the frames into the corresponding insertion holes.

### BRIEF DESCRIPTION OF DRAWINGS

Fig. 1 is a side view showing the whole of a vehicle according to a preferred embodiment as seen from a left side thereof.
Fig. 2 is a front view showing a front part of the vehicle shown in Fig. 1.
Fig. 3 is a side view showing a left shock absorbing device and a left front wheel.
Fig. 4 is a plan view showing the front part of the vehicle shown in Fig. 1.
Fig. 5 is a plan view showing the front part of the vehicle shown in Fig. 1 when the vehicle is steered.
Fig. 6 is a front view showing the front part of the vehicle shown in Fig. 1 when the vehicle is caused to lean.
Fig. 7 is a front view showing the front part of the vehicle shown in Fig. 1 when the vehicle is caused to lean while being steered.
Fig. 8 is a perspective view of a body frame.
Fig. 9 is a sectional view of a link supporting portion.
Fig. 10 is a side view of a connecting bracket.
Fig. 11 is a top view of the connecting bracket.
Fig. 12 is a front view of the connecting bracket.
Fig. 13 is a rear view of the connecting bracket.

### MODE FOR CARRYING OUT THE INVENTION

Referring to the accompanying drawings, a preferred embodiment will be described in detail below.

In the accompanying drawings, an arrow F denotes a forward direction of a vehicle. An arrow B denotes a rearward direction of the vehicle. An arrow U denotes an upward direction of the vehicle. An arrow D denotes a downward direction of the vehicle. An arrow R denotes a rightward direction of the vehicle. An arrow L denotes a leftward direction of the vehicle.

A vehicle turns with a body frame being caused to lean to the left or right of the vehicle from a vertical direction. Then, in addition to the directions relative to the vehicle, directions relative to the body frame are defined. In the accompanying drawings, an arrow FF denotes a forward direction of the body frame. An arrow FB denotes a rearward direction of the body frame. An arrow FU denotes an upward direction of the body frame. An arrow FD denotes a downward direction of the body frame. An arrow FR denotes a rightward direction of the body frame. An arrow FL denotes a leftward direction of the body frame.

In this specification, a "front-and-rear direction of the body frame," a "left-and-right direction of the body frame" and an "up-and-down direction of the body frame" mean a front-and-rear direction, a left-and-right direction and an up-and-down direction based on the body frame as viewed from a rider who rides the vehicle. A "side of the body frame" means a right side of the body frame or a left side of the vehicle body.

In this specification, "extending in the front-and-rear direction of the body frame" includes extending in the front-and-rear direction of the body frame while being inclined with respect to the front-and-rear direction of the body frame and means extending in the front-and-rear direction of the body frame while being inclined more towards the front-to-rear direction than towards the left-to-right direction and the up-to-down direction of the body frame.

In this specification, "extending in the left-and-right direction of the body frame" includes extending in the left-and-right direction of the body frame while being inclined with respect to the left-and-right direction of the body frame and means extending in the left-and-right direction of the body frame while being inclined more towards the left-and-right direction than towards the front-and-rear direction and the up-and-down direction of the body frame.

In this description, "extending in the up-and-down direction of the body frame" includes extending in the up-and-down direction of the body frame while being inclined with respect to the up-and-down direction of the body frame and means extending in the up-and-down direction of the body frame while being inclined more towards the up-and-down direction than towards the front-and-rear direction and the left-and-right direction of the body frame.

In this description, an "upright state of the vehicle" or the "vehicle stands upright" means a state in which the vehicle remains not steered and the up-and-down direction of the body frame coincides with a vertical direction. In this state, the direction based on the vehicle coincides with the direction based on the body frame. When the vehicle is turning with the body frame caused to lean to the left or right from the vertical direction, the left-and-right direction of the vehicle does not coincide with the left-and-right direction of the body frame. The up-and-down direction of the vehicle does not coincide with the up-and-down direction of the body frame. However, the front-and-rear direction of the vehicle coincides with the front-and-rear direction of the body frame.

In this description, "rotation or rotating" means that a member is displaced at an angle of 360 degrees or more about a center axis thereof. In this description, "turn or turning" means that a member is displaced at an angle of less than 360 degrees about a center axis thereof.

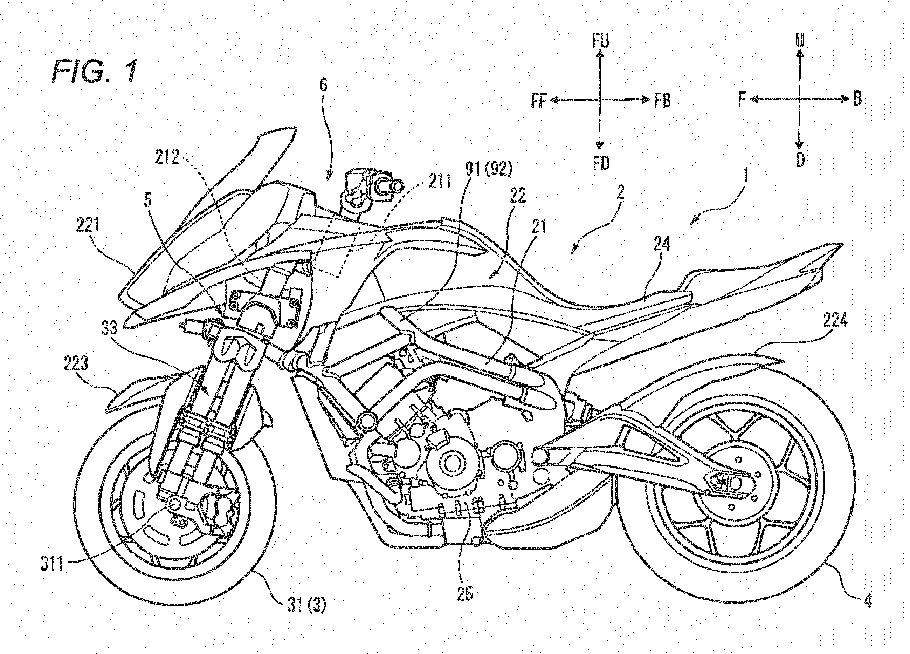

Referring to Figs. 1 to 7, a vehicle 1 according to a preferred embodiment will be described. A vehicle 1 is a vehicle that is driven by means of power generated from a power source and that includes a body frame that can lean and two front wheels which are aligned side by side in a left-and-right direction of the body frame.

Fig. 1 is a left side view of the whole of the vehicle 1 as viewed from the left thereof. The vehicle 1 includes a vehicle main body portion 2, a pair of left and right front wheels 3, a rear wheel 4, a link mechanism 5 and a steering force transmission mechanism 6.

The vehicle main body portion 2 includes a body frame 21, a body cover 22, a seat 24 and an engine unit 25. In Fig. 1, the vehicle 1 is in an upright state. The following description which will be made by reference to Fig. 1 is based on the premise that the vehicle 1 is standing in the upright state.

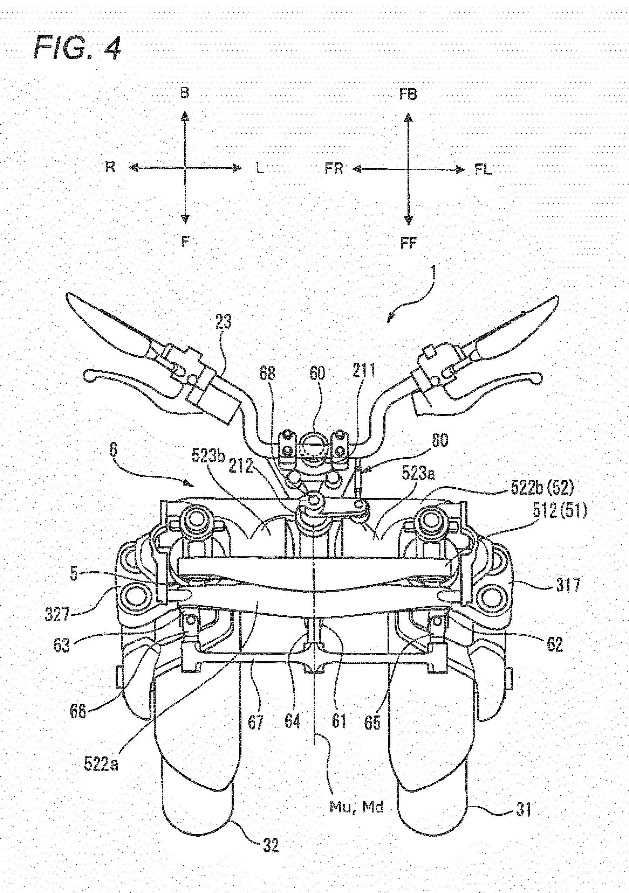

The body frame 21 extends in a front-and-rear direction of the vehicle 1. The body frame 21 includes a headpipe 211 (refer to Fig. 4: an example of a rear shaft supporting portion) and a link supporting portion 212 (refer to Fig. 4: an example of a front shaft supporting portion).

The headpipe 211 supports an upstream side steering shaft 60, which will be described later, so as to turn. The headpipe 211 extends in an up-and-down direction of the body frame 21. The link supporting portion 212 is provided ahead of the headpipe 211 in the front-and-rear direction of the vehicle 1. The link supporting portion 212 supports the link mechanism 5 so as to turn.

The body frame 21 supports the engine unit 25 behind the headpipe 211 in the front-and-rear direction of the vehicle 1. The engine unit 25 supports the rear wheel 4 so as to swing up and down. The engine unit 25 includes a power source such as an engine or an electric motor with a battery and a device such as a transmission. The power source generates force for driving the vehicle 1.

The body cover 22 includes a front cover 221, a pair of left and right front fenders 223 and a rear fender 224. The body cover 22 is a body part which covers at least part of body parts which are mounted on the vehicle 1 such as the pair of left and right front wheels 3, the body frame 21, the link mechanism 5 and the like.

The front cover 221 is disposed ahead of the seat 24. The front cover 221 covers the link mechanism 5 and at least part of the steering force transmission mechanism 6.

At least portions of the pair of left and right front fenders 223 are both disposed directly below the front cover 221. At least portions of the pair of left and right front fenders 223 are disposed directly above the pair of left and right front wheels 3, respectively.

At least a portion of the rear fender 224 is disposed directly above the rear wheel 4.

At least portions of the pair of left and right front wheels 3 are disposed directly below the front cover 221.

At least a portion of the rear wheel 4 is disposed below the seat 24. At least a portion of the rear wheel 4 is disposed directly below the rear fender 224.

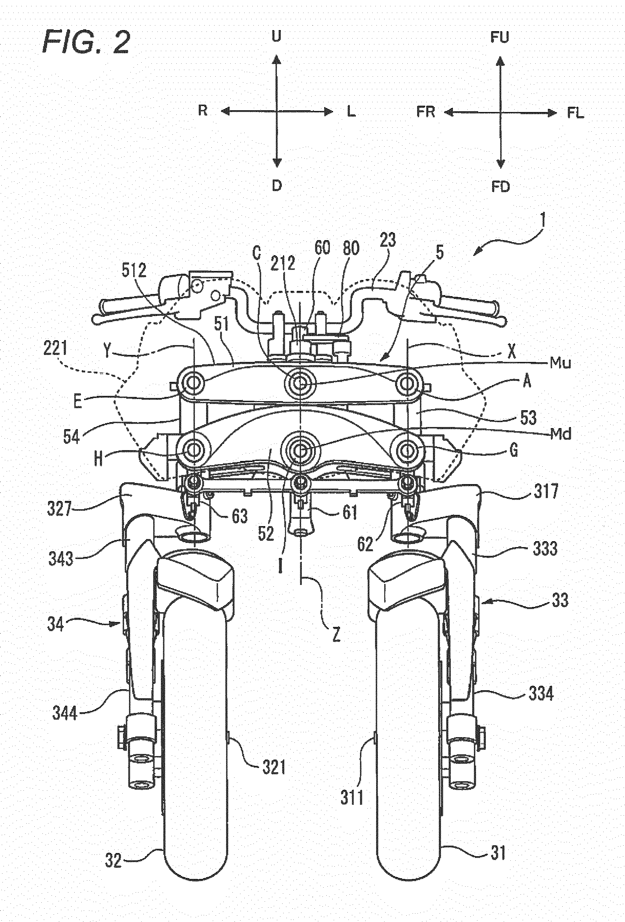

Fig. 2 is a front view of the front part of the vehicle 1 as viewed from the front of the body frame 21. In Fig. 2, the vehicle 1 is standing in the upright state. The following description which will be made by reference to Fig. 2 is based on the premise that the vehicle 1 is standing in the upright state. Fig. 2 shows the front part of the vehicle 1 as it were seen through the front cover 221 that is indicated by dashed lines.

The pair of left and right front wheels 3 include a left front wheel 31 and a right front wheel 32. The left front wheel 31 and the right front wheel 32 are provided so as to be aligned side by side in a left-and-right direction of the body frame 21. The right front wheel 32 is provided on the right of the left front wheel 31 on the body frame 21.

The vehicle 1 includes a left shock absorbing device 33, a right shock absorbing device 34, a left bracket 317 and a right bracket 327.

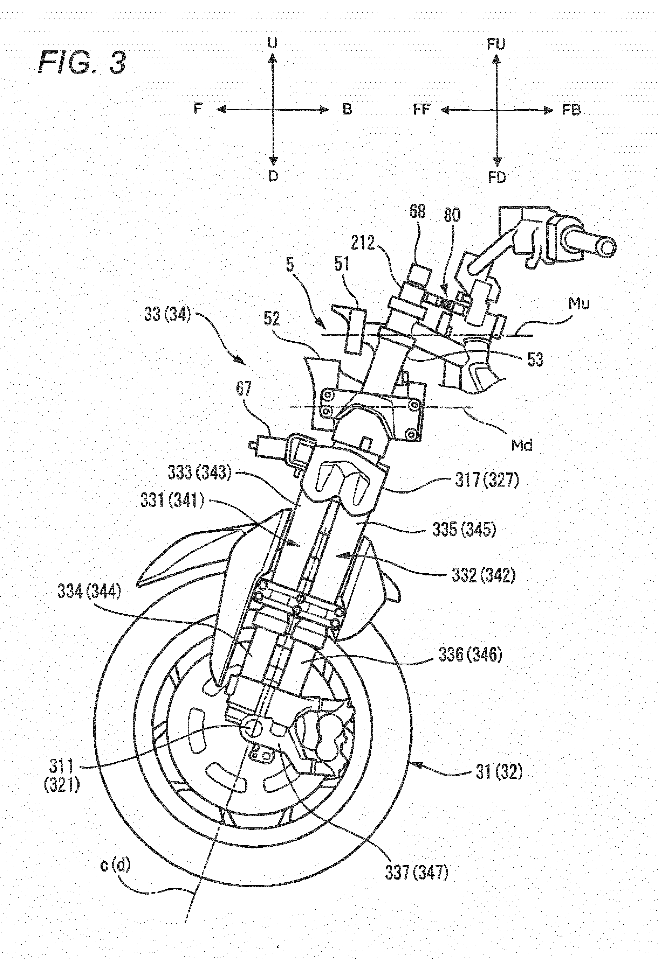

Fig. 3 is a side view showing the left shock absorbing device 33 and the left front wheel 31. The right shock absorbing device 34 and the left shock absorbing device 33 are constructed laterally symmetrical with each other, and therefore, reference numerals denoting the right shock absorbing device 34 are also written in Fig. 3. As shown in Fig. 3, the left shock absorbing device 33 is a so-called telescopic shock absorbing device. The left shock absorbing device 33 has a left front telescopic element 331, a left rear telescopic element 332 and a left inner connecting element 337.

The left front telescopic element 331 has a left front outer tube 333 and a left front inner tube 334. A lower portion of the left front inner tube 334 is connected to the left inner connecting element 337. An upper portion of the left front inner tube 334 is inserted into the left front outer tube 333. An upper portion of the left front outer tube 333 is connected to the left bracket 317. The left front inner tube 334 is displaced relative to the left front outer tube 333 along a left extension and contraction axis c that extends in the up-and-down direction of the body frame 21. The left front telescopic element 331 can extend and contract in the direction of the left extension and contraction axis c as a result of the left front inner tube 334 being displaced relative to the left front outer tube 333 along the left extension and contraction axis c.

At least a portion of the left rear telescopic element 332 is provided behind the left front telescopic element 331. The left rear telescopic element 332 has a left rear outer tube 335 and a left rear inner tube 336. The left rear outer tube 335 and the left front outer tube 333 are connected together so as not to move. A lower portion of the left rear inner tube 336 is connected to the left inner connecting element 337. An upper portion of the left rear inner tube 336 is inserted into the left rear outer tube 335. An upper portion of the left rear outer tube 335 is connected to the left bracket 317. The left rear inner tube 336 is displaced relative to the left rear outer tube 335 along the left extension and contraction axis c that extends in the up-and-down direction of the body frame 21. The left rear telescopic element 332 can extend and contract in the direction of the left extension and contraction axis c as a result of the left rear inner tube 336 being displaced relative to the left rear outer tube 335 along the left extension and contraction axis c.

The left inner connecting element 337 supports a left axle member 311 of the left front wheel 31 rotatably. The left inner connecting element 337 connects a lower portion of the left front inner tube 334 and a lower portion of the left rear inner tube 336 together.

The left shock absorbing device 33 attenuates or absorbs a displacement of the left front wheel 31 relative to the left front outer tube 333 and the left rear outer tube 335 along the left extension and contraction axis c by an extending or contracting action of the left front telescopic element 331 and an extending or contracting action of the left rear telescopic element 332.

As shown in Fig. 3, the right shock absorbing device 34 is a so-called telescopic shock absorbing device. The right shock absorbing device 34 has a right front telescopic element 341, a right rear telescopic element 342 and a right inner connecting element 347.

The right front telescopic element 341 has a right front outer tube 343 and a right front inner tube 344. A lower portion of the right front inner tube 344 is connected to the right inner connecting element 347. An upper portion of the right front inner tube 344 is inserted into the right front outer tube 343. An upper portion of the right front outer tube 343 is connected to the right bracket 327. The right front inner tube 344 is displaced relative to the right front outer tube 343 along a right extension and contraction axis d that extends in the up-and-down direction of the body frame 21. The right front telescopic element 341 can extend and contract in the direction of the right extension and contraction axis d as a result of the right front inner tube 344 being displaced relative to the right front outer tube 343 along the right extension and contraction axis d.

At least a portion of the right rear telescopic element 342 is provided behind the right front telescopic element 341. The right rear telescopic element 342 has a right rear outer tube 345 and a right rear inner tube 346. The right rear outer tube 345 and the right front outer tube 343 are connected together so as not to move. A lower portion of the right rear inner tube 346 is connected to the right inner connecting element 347. An upper portion of the right rear inner tube 346 is inserted into the right rear outer tube 345. An upper portion of the right rear outer tube 345 is connected to the right bracket 327. The right rear inner tube 346 is displaced relative to the right rear outer tube 345 along the right extension and contraction axis d that extends in the up-and-down direction of the body frame 21. The right rear telescopic element 342 can extend and contract in the direction of the right extension and contraction axis d as a result of the right rear inner tube 346 being displaced relative to the right rear outer tube 345 along the right extension and contraction axis d.

The right inner connecting element 347 supports a right axle member 321 of the right front wheel 32 rotatably. The right inner connecting element 347 connects a lower portion of the right front inner tube 344 and a lower portion of the right rear inner tube 346 together.

The right shock absorbing device 34 attenuates or absorbs the displacement of the right front wheel 32 relative to the right front outer tube 343 and the right rear outer tube 345 along the right extension and contraction axis d by an extending or contracting action of the right front telescopic element 341 and an extending or contracting action of the right rear telescopic element 342.

As shown in Fig. 4, the vehicle 1 includes the steering force transmission mechanism 6. The steering force transmission mechanism 6 includes a handlebar 23 (an example of a steering force input portion), the upstream side steering shaft 60 (an example of a rear shaft member), a connecting member 80, and a downstream side steering shaft 68 (an example of a front shaft member).

The body frame 21 includes the headpipe 211 that supports the upstream side steering shaft 60 so as to turn and the link supporting portion 212 that supports the downstream side steering shaft 68 so as to turn. As shown in Fig. 2, the link supporting portion 212 extends in the direction of a middle steering axis Z that extends in the up-and-down direction of the body frame 21. In this embodiment, a turning center (a central steering axis) of the handlebar 23 coincides with a turning center (a rear axis) of the upstream side steering shaft.

A steering force is inputted into the handlebar 23. The upstream side steering shaft 60 is connected to the handlebar 23. An upper portion of the upstream side steering shaft 60 is situated behind a lower portion of the upstream side steering shaft 60 in a front-and-rear direction of the body frame 21. The upstream side steering shaft 60 is supported in the headpipe 211 so as to turn therein.

The connecting member 80 connects the upstream side steering shaft 60 and the downstream side steering shaft 68 together. The connecting member 80 is displaced as the upstream side steering shaft 60 turns. The connecting member 80 transmits the turning of the upstream side steering shaft 60 to the downstream side steering shaft 68.

The downstream side steering shaft 68 is supported in the link supporting portion 212 so as to turn therein. The downstream side steering shaft 68 is connected to the connecting member 80. The downstream side steering shaft 68 is provided ahead of the upstream side steering shaft 60 in the front-and-rear direction of the body frame 21. The downstream side steering shaft 68 turns as the connecting member 80 is displaced. As a result of the downstream side steering shaft 68 turning, the left front wheel 31 and the right front wheel 32 are steered or turned via a tie-rod 67.

The steering force transmission mechanism 6 transmits a steering force exerted on a handlebar 23 by the rider when operating the handlebar 23 to the left bracket 317 and the right bracket 327. A specific configuration will be described in detail later.

In the vehicle 1 according to this embodiment, the link mechanism 5 adopts a four parallel joint link system (also referred to as a parallelogram link).

As shown in Fig. 2, the link mechanism 5 is disposed above the left front wheel 31 and the right front wheel 32. The link mechanism 5 includes an upper cross member 51, a lower cross member 52, a left side member 53 and a right side member 54. The link mechanism 5 is supported so as to turn by the link supporting portion 212 that extends in the direction of the middle steering axis Z. Even though the upstream side steering shaft 60 is turned as a result of the operation of the handlebar 23, the link mechanism 5 is prevented from following the rotation of the upstream side steering shaft 60 and hence does not turn.

The upper cross member 51 includes a plate member 512. The plate member 512 is disposed ahead of the link supporting portion 212. The plate member 512 extends in a left-and-right direction of the body frame 21.

A middle portion of the upper cross member 51 is connected to the link supporting portion 212 by a connecting portion C. The upper cross member 51 can turn relative to the link supporting portion 212 about a middle upper axis Mu that passes through the connecting portion C to extend in the front-and-rear direction of the body frame 21.

A left end portion of the upper cross member 51 is connected to the left side member 53 by a connecting portion A. The upper cross member 51 can turn relative to the left side member 53 about a left upper axis which passes through the connecting portion A to extend in the front-and-rear direction of the body frame 21.

A right end portion of the upper cross member 51 is connected to the right side member 54 by a connecting portion E. The upper cross member 51 can turn relative to the right side member 54 about a right upper axis that passes through the connecting portion E to extend in the front-and-rear direction of the body frame 21.

Fig. 4 is a plan view of the front part of the vehicle 1 as seen from above the body frame 21. In Fig. 4, the vehicle 1 is standing in the upright state. The following description which will be made by reference to Fig. 4 is based on the premise that the vehicle 1 is standing in the upright state.

As shown in Fig, 4, the lower cross member 52 includes a lower front cross element 522a and a lower rear cross element 522b. The lower front cross element 522a is disposed ahead of the link supporting portion 212. The lower rear cross element 522b is disposed behind the link supporting portion 212. The lower front cross element 522a and the lower rear cross member 522b extend in the left-and-right direction of the body frame 21. The lower front cross element 522a and the lower rear cross member 522b are connected together by a left connecting block 523a and a right connecting block 532b. The left connecting block 523a is disposed on the left of the link supporting portion 212. The right connecting block 523b is disposed on the right of the link supporting portion 212.

Returning to Fig. 2, the lower cross member 52 is disposed below the upper cross member 51. The lower cross member 52 extends parallel to the upper cross member 51. A middle portion of the lower cross member 52 is connected to the link supporting portion 212 by a connecting portion I. The lower cross member 52 can turn about a middle down or lower axis Md that passes through the connecting portion 1 to extend in the front-and-rear direction of the body frame 21.

A left end portion of the lower cross member 52 is connected to the left side member 53 by a connecting portion G. The lower cross member 52 can turn about a left lower axis which passes through the connecting portion G to extend in the front-and-rear direction of the body frame 21.

A right end portion of the lower cross member 52 is connected to the right side member 54 by a connecting portion H. The lower cross member 52 can turn about a right lower axis which passes through the connecting portion H to extend in the front-and-rear direction of the body frame 21. A length of the upper cross member 51 from the connecting portion E to the connecting portion A is substantially equal to a length of the lower cross member from the connecting portion H to the connecting portion G.

The middle upper axis Mu, the right upper axis, the left upper axis, the middle lower axis Md, the right lower axis and the left lower axis extend parallel to one another. The middle upper axis Mu, the right upper axis, the left upper axis, the middle lower axis Md, the right lower axis and the left lower axis are disposed above the left front wheel 31 and the right front wheel 32.

As shown in Figs. 2 and 4, the left side member 53 is disposed on the left of the link supporting portion 212. The left side member 53 is disposed above the left front wheel 31. The left side member 53 extends parallel to the middle steering axis Z of the link supporting portion 212. An upper portion of the left side member 53 is disposed behind a lower portion thereof.

A lower portion of the left side member 53 is connected to the left bracket 317. The left bracket 317 can turn about a left steering axis X relative to the left side member 53. The left steering axis X extends parallel to the middle steering axis Z of the link supporting portion 212.

As shown in Figs. 2 and 4, the right side member 54 is disposed on the right of the link supporting portion 212. The right side member 54 is disposed above the right front wheel 32. The right side member 54 extends parallel to the middle steering axis Z of the link supporting portion 212. An upper portion of the right side member 54 is disposed behind a lower portion thereof.

A lower portion of the right side member 54 is connected to the right bracket 327. The right bracket 327 can turn about a right steering axis Y relative to the right side member 54. The right steering axis Y extends parallel to the middle steering axis Z of the link supporting portion 212.

Thus, as has been described above, the upper cross member 51, the lower cross member 52, the left side member 53 and the right side member 54 are supported by the link supporting portion 212 so that the upper cross member 51 and the lower cross member 52 are held in postures which are parallel to each other and so that the left side member 53 and the right side member 54 are held in postures which are parallel to each other.

As shown in Figs. 2 and 4, the steering force transmission mechanism 6 includes a middle transmission plate 61, a left transmission plate 62, a right transmission plate 63, a middle joint 64, a left joint 65, a right joint 66, and the tie-rod 67.

The middle transmission plate 61 is connected to a lower portion of the downstream side steering shaft 68. The middle transmission plate 61 cannot turn relative to the downstream side steering shaft 68. The middle transmission plate 61 can turn about the middle steering axis Z relative to the link supporting portion 212.

The left transmission plate 62 is disposed on the left of the middle transmission plate 61. The left transmission plate 62 is connected to the left bracket 317. The left transmission plate 62 cannot turn relative to the left bracket 317. The left transmission plate 62 can turn about the left steering axis X relative to the left side member 53.

The right transmission plate 63 is disposed on the right of the middle transmission plate 61. The right transmission plate 63 is connected to the right bracket 327. The right transmission plate 63 cannot turn relative to the right bracket 327. The right transmission plate 63 can turn about the right steering axis Y relative to the right side member 54.

As shown in Fig. 4, the middle joint 64 is connected to a front portion of the middle transmission plate 61 via a shaft portion that extends in the up-and-down direction of the body frame 21. The middle transmission plate 61 and the middle joint 64 are allowed to turn relative to each other about this shaft portion.

The left joint 65 is disposed on the left of the middle joint 64. The left joint 65 is connected to a front portion of the left transmission plate 62 via a shaft that extends in the up-and-down direction of the body frame. The left transmission plate 62 and the left joint 65 are allowed to turn relative to each other about this shaft portion.

The right joint 66 is disposed on the right of middle joint 64. The right joint 66 is connected to a front portion of the right transmission plate 63 via a shaft that extends in the up-and-down direction of the body frame, The right transmission plate 63 and the right joint 66 are allowed to turn relative to each other about this shaft portion.

A shaft portion that extends in the front-and-rear direction of the body frame 21 is provided at a front portion of the middle joint 64. A shaft portion that extends in the front-and-rear direction of the body frame 21 is provided at a front portion of the left joint 65. A shaft portion that extends in the front-and-rear direction of the body frame 21 is provided at a front portion of the right joint 66.

The tie-rod 67 extends in the left-and-right direction of the body frame 21. The tie-rod 67 is connected to the middle joint 64, the left joint 65 and the right joint 66 via those shaft portions. The tie-rod 67 and the middle joint 64 can turn relative to each other about the shaft portion that is provided at the front portion of the middle joint 64. The tie-rod 67 and the left joint 65 can turn relative to each other about the shaft portion that is provided at the front portion of the left joint 65. The tie rod 67 and the right joint 66 can turn relative to each other about the shaft portion that is provided at the front portion of the right joint 66.

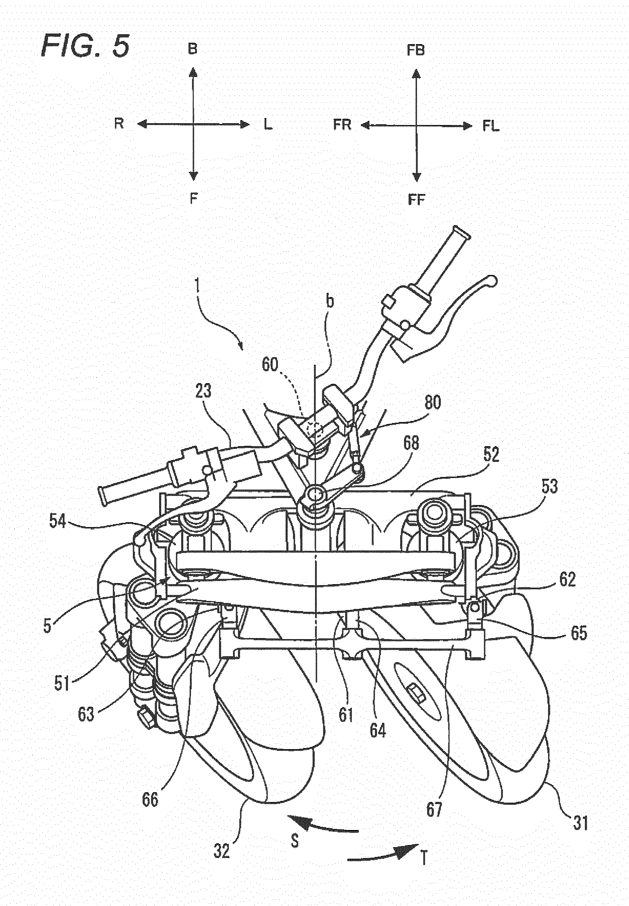

Next, referring to Figs. 4 and 5, a steering operation of the vehicle 1 will be described. Fig. 5 is a plan view, as seen from above the body frame 21, of the front part of the vehicle 1 with the left front wheel 31 and the right front wheel 32 turned to the left.

When the rider operates the handlebar 23, the upstream side steering shaft 60 turns. The turn of the upstream side steering shaft 60 is transmitted to the downstream side steering shaft 68 via the connecting member 80. The downstream side steering shaft 68 turns relative to the link supporting portion 212 about a front steering axis b. In the case of the left front wheel 31 and the right front wheel 32 being turned to the left as shown in Fig. 5, as the handlebar 23 is operated, the middle transmission plate 61 turns relative to the link supporting portion 212 in a direction indicated by an arrow T about the front steering axis b.

In association with the turning of the middle transmission plate 61 in the direction indicated by the arrow T, the middle joint 64 of the tie-rod 67 turns relative to the middle transmission plate 61 in a direction indicated by an arrow S. This moves the tie-rod 67 left rear with its posture kept unchanged.

As the tie-rod 67 moves left rear, the left joint 65 and the right joint 66 of the tie-rod 67 turn in the direction indicated by the arrow S relative to the left transmission plate 62 and the right transmission plate 63, respectively. This causes the left transmission plate 62 and the right transmission plate 63 to turn in the direction indicated by the arrow T with the tie rod 67 maintaining its posture unchanged.

When the left transmission plate 62 turns in the direction indicated by the arrow T, the left bracket 317, which cannot turn relative to the left transmission plate 62, turns in the direction indicated by the arrow T about the left steering axis X relative to the left side member 53.

When the right transmission plate 63 turns in the direction indicated by the arrow T, the right bracket 327, which cannot turn relative to the right transmission plate 63, turns in the direction indicated by the arrow T about the right steering axis Y relative to the right side member 54.

When the left bracket 317 turns in the direction indicated by the arrow T, the left shock absorbing device 33, which is connected to the left bracket 317 via the left front outer tube 333 and the left rear outer tube 335, turns in the direction indicated by the arrow T about the left steering axis X relative to the left side member 53. When the left shock absorbing device 33 turns in the direction indicated by the arrow T, the left front wheel 31, which is supported on the left shock absorbing device 33, turns in the direction indicated by the arrow T about the left steering axis X relative to the left side member 53.

When the right bracket 327 turns in the direction indicated by the arrow T, the right shock absorbing device 34, which is connected to the right bracket 327 via the right front outer tube 343 and the right rear outer tube 345, turns in the direction indicated by the arrow T about the right steering axis Y relative to the right side member 54. When the right shock absorbing device 34 turns in the direction indicated by the arrow T, the right front wheel 32, which is supported on the right shock absorbing device 34, turns in the direction indicated by the arrow T about the right steering axis Y relative to the right side member 54.

When the rider operates the handlebar 23 so as to turn the left front wheel 31 and the right front wheel 32 to the right, the elements described above turn in the direction indicated by the arrow S. Since the elements move the other way around in relation to the left-and-right direction, the detailed description thereof will be omitted here.

Thus, as has been described heretofore, as the rider operates the handlebar 23, the steering force transmission mechanism 6 transmits the steering force accordingly to the left front wheel 31 and the right front wheel 32. The left front wheel 31 and the right front wheel 32 turn about the left steering axis X and the right steering axis Y, respectively, in the direction corresponding to the direction in which the handlebar 23 is operated by the rider.

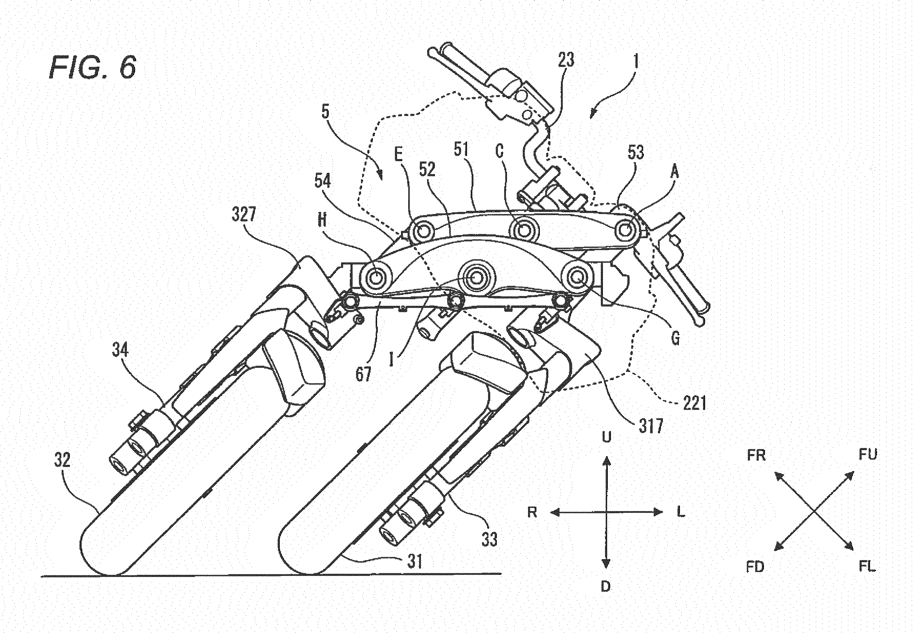

Next, referring to Figs. 2 and 6, a leaning operation of the vehicle 1 will be described. Fig. 6 is a front view of the front part of the vehicle 1 as viewed from the front of the body frame 21, showing a state where the body frame 21 leans to the left of the vehicle 1. Fig. 6 shows a state in which the front part of the vehicle 1 is seen as through the front cover 221 which is indicated by dashed lines.

As shown in Fig. 2, with the vehicle 1 standing in the upright state, when looking at the vehicle 1 from the front of the body frame 21, the link mechanism 5 looks like having a rectangular shape. As shown in Fig. 6, with the vehicle 1 leaning to the left, when looking at the vehicle 1 from the front of the body frame 21, the link mechanism 5 looks like having a parallelogram shape. The deformation of the link mechanism 5 is associated with the leaning of the body frame 21 in the left-and-right direction of the vehicle 1. The operation of the link mechanism 5 means that the upper cross member 51, the lower cross member 52, the left side member 53 and the right side member 54 that make up the link mechanism 5 turn relatively about turning axes which pass through the corresponding connecting portions A, C, E, G, H, I, whereby the shape of the link mechanism 5 changes.

For example, as shown in Fig. 6, when the rider causes the vehicle 1 to lean to the left, the link supporting portion 212 leans to the left from the vertical direction. When the link supporting portion 212 leans, the upper cross member 51 turns counterclockwise as seen from the front of the vehicle 1 about the middle upper axis Mu that passes through the connecting portion C relative to the link supporting portion 212. Similarly, the lower cross member 52 turns counterclockwise as seen from the front of the vehicle 1 about the middle lower axis Md that passes through the connecting portion I relative to the link supporting portion 212. This causes the upper cross member 51 to move to the left relative to the lower cross member 52.

As the upper cross member 51 moves to the left, the upper cross member 51 turns counterclockwise as seen from the front of the vehicle 1 about the left upper axis that passes through the connecting portion A and the right upper axis that passes through the connecting portion E relative to the left side member 53 and the right side member 54, respectively. Similarly, the lower cross member 52 turns counterclockwise as seen from the front of the vehicle 1 about the left lower axis that passes through the connecting portion G and the right lower axis that passes through the connecting portion H relative to the left side member 53 and the right side member 54, respectively. This causes the left side member 53 and the right side member 54 to lean to the left from the vertical direction with their postures kept parallel to the link supporting portion 212.

As this occurs, the lower cross member 52 moves to the left relative to the tie- rod 67. As the lower cross member 52 moves to the left, the shaft portions that are provided at the respective front portions of the middle joint 64, the left joint 65 and the right joint 66 turn relative to the-tie rod 67. This allows the tie-rod 67 to hold a parallel posture to the upper cross member 51 and the lower cross member 52.

As the left side member 53 leans to the left, the left bracket 317, which is connected to the left side member 53, leans to the left. As the left bracket 317 leans to the left, the left shock absorbing device 33, which is connected to the left bracket 317, leans to the left. As the left shock absorbing device 33 leans to the left, the left front wheel 31, which is supported on the left shock absorbing device 33, leans to the left with its posture kept parallel to the link supporting portion 212.

As the right side member 54 leans to the left, the right bracket 327, which is connected to the right side member 54, leans to the left. As the right bracket 327 leans to the left, the right shock absorbing device 34, which is connected to the right bracket 327, leans to the left. As the right shock absorbing device 34 leans to the left, the right front wheel 32, which is supported on the right shock absorbing device 34, leans to the left with its posture kept parallel to the link supporting portion 212.

The leaning operations of the left front wheel 31 and the right front wheel 32 are described based on the vertical direction. However, when the vehicle 1 leans (when the link mechanism 5 is activated to operate), the up-and-down direction of the body frame 21 does not coincide with the vertical up-and-down direction. In a case where the leaning operations are described based on the up-and-down direction of the body frame 21, when the link mechanism 5 is activated to operate, the relative positions of the left front wheel 31 and the right front wheel 32 to the body frame 21 change. In other words, the link mechanism 5 changes the relative positions of the left front wheel 31 and the right front wheel 32 to the body frame 21 in the up-and-down direction of the body frame 21 to thereby cause the body frame 21 to lean relative to the vertical direction.

When the rider causes the vehicle 1 to lean to the right, the elements lean to the right. Since the elements move the other way around in relation to the left-and-right direction, the detailed description thereof will be omitted here.

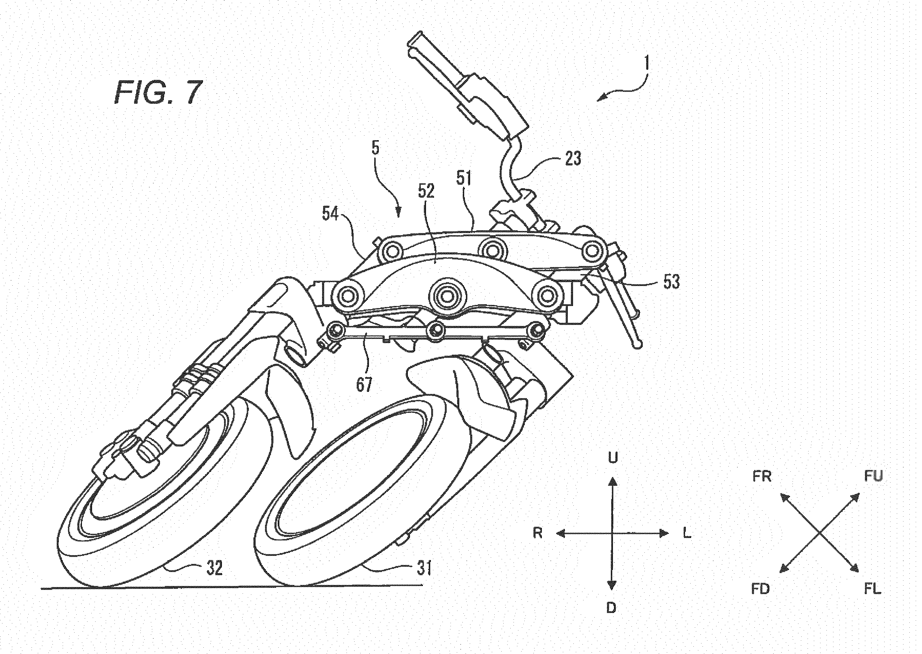

Fig. 7 is a front view of the front part of the vehicle with the vehicle 1 caused to lean and steered. Fig. 7 shows a state in which the vehicle 1 is steered to the left while being caused to lean to the left. The steering operation turns the left front wheel 31 and the right front wheel 32 to the left, and the leaning operation causes the left front wheel 31 and the right front wheel 32 to lean to the left together with the body frame 21. Namely, in this state, the link mechanism 5 exhibits the parallelogram shape, and the tie-rod 67 moves towards the left rear of the body frame 21 from its position that the tie-rod 67 takes when the body frame 21 stays in the upright state.

Thus, has been described heretofore, the vehicle 1 of this embodiment has:
the body frame 21 that can lean to the right of the vehicle 1 when the vehicle 1 turns right and can lean to the left of the vehicle 1 when the vehicle 1 turns left;
the right front wheel 32 that can turn about the right steering axis that extends in the up-and-down direction of the body frame 21;
the left front wheel 31 that is provided on the left of the right front wheel 32 in the left-and-right direction of the body frame 21 and that can turn about the left steering axis that is parallel to the right steering axis;
the right shock absorbing device 34 that supports the right front wheel 32 at the lower portion thereof and that absorbs the displacement of the right front wheel 32 towards the upper portion thereof in the up-and-down direction of the body frame 21;
the left shock absorbing device 33 that supports the left front wheel 31 at the lower portion thereof and that absorbs the displacement of the left front wheel 31 towards the upper portion thereof in the up-and-down direction of the body frame 21; and
the link mechanism 5 that supports the right front wheel 32 and the left front wheel 31 so as to be displaced relative to each other in the up-and-down direction of the body frame 21.

The link mechanism 5 has:
the right side member 54 that supports the upper portion of the right shock absorbing device 34 so as to turn about the right steering axis;
the left side member 53 that supports the upper portion of the left shock absorbing device 33 so as to turn about the left steering axis;
the upper cross member 51 that supports the upper portion of the right side member 54 at the right end portion thereof so as to turn about the right upper axis that extends in the front-and-rear direction of the body frame 21 and supports the upper portion of the left side member 53 at the left end portion thereof so as to turn about the left upper axis that is parallel to the right upper axis and that is supported on the body frame 21 at the middle portion thereof so as to turn about the middle upper axis Mu that is parallel to the right upper axis and the left upper axis; and
the lower cross member 52 that supports the lower portion of the right side member 54 at the right end portion thereof so as to turn about the right lower axis that is parallel to the right upper axis and supports the lower portion of the left side member 53 so as to turn about the left lower axis that is parallel to the left upper axis and that is supported on the body frame 21 at the middle portion thereof so as to turn about the middle lower axis Md that is parallel to the middle upper axis Mu.

### <Details of Body Frame 21 >

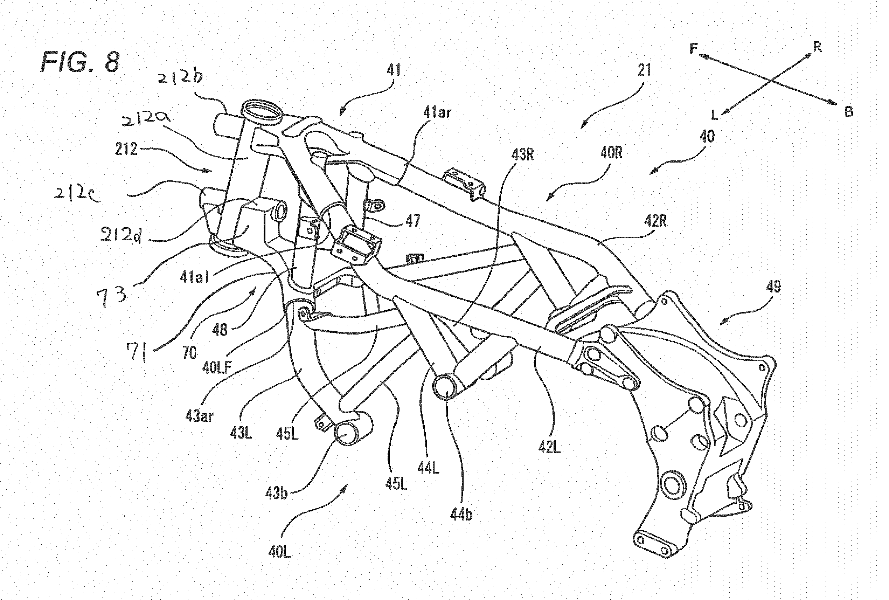

Next, the body frame 21 will be described in detail by using Figs. 8 to 13. Fig. 8 is a perspective view of the body frame 21. As shown in Fig. 8, the body frame 21 has a main frame 40, an upper bracket 41, a connecting bracket 70 and the link supporting portion 212. The main frame 40 extends in at least the front-and-rear direction of the vehicle 1.

The main frame 40 supports vehicle mounted parts such as the engine unit 25 (refer to Fig. 1). The main frame 40 has a right frame 40R and a left frame 40L that is provided on the left of the right frame 40R. A front upper portion of the right frame 40R and a front upper portion of the left frame 40L are connected to an upper portion of the link supporting portion 212 via the upper bracket 41. A front lower portion of the right frame 40R and a front lower portion of the left frame 40L are connected to a lower portion of the link supporting portion 212 via the connecting bracket 70.

In this embodiment, the right frame 40R and the left frame 40L are each made up of a plurality of metallic pipes which are connected to one another. The right frame 40R extends in at least the front-and-rear direction of the vehicle 1. The right frame 40R supports right portions of the vehicle mounted parts excluding the body frame 21. The left frame 40L is provided on the left of the right frame 40R on the vehicle 1. The left frame 40L extends in at least the front-and-rear direction of the vehicle 1. The left frame 40L supports left portions of the vehicle mounted parts excluding the body frame 21. In this embodiment, the right frame 40R and the left frame 40L support the engine unit 25 (refer to Fig. 1) and a rear bracket 49 as the vehicle mounted parts.

### <Right Frame 40R and Left Frame 40L>

In this embodiment, the right frame 40R has a configuration that is laterally symmetrical with that of the left frame 40L. Due to this, the left frame 40L will be described by the use of Fig. 8, and a description of the right frame 40R will be omitted here. For reference numerals of respective members of the right frame 40R, R is given in place of L at the end of each of reference numerals given to respective members of the left frame 40L.

The left frame 40L has a left upper frame 42L, a left lower frame 43L, a left engine supporting portion 44L and left vertical frames 45L. The left upper frame 42L and the left lower frame 43L extend in the front-and-rear direction of the vehicle 1. The left upper frame 42L and the left lower frame 43L are formed of pipe members. The left engine supporting portion 44L is provided on the left upper frame 42L at a middle portion thereof in the front-and-rear direction of the vehicle 1.

The left engine supporting portion 44L is formed by welding two pipe members to the left upper frame 42L. A first left fastening hole 44b is provided in the left engine supporting portion 44L, so that a first fastening bolt that is fastened to a left portion of the engine unit 25 is inserted thereinto. A second left fastening hole 43b is provided at a rear end of the left lower frame 43L, so that a second fastening bolt that is fastened to the left portion of the engine unit 25 is inserted thereinto. The left portion of the engine unit 25 is supported on the left frame 40L by the first fastening bolt and the second fastening bolt.

The two left vertical frames 45L connect the left engine supporting portion 44L and the left lower frame 43L together. The left vertical frames 45L are formed of pipe members. The left engine supporting portion 44L and upper portions of the left vertical frames 45L are connected together and the left lower frame 43L is connected to lower portion of the left vertical frames 45L.

The rear bracket 49 is connected to a rear end of the left upper frame 42L. The left frame 40L supports a left portion of the rear bracket 49. A rear suspension device for hanging the rear wheel 4 is attached to the rear bracket 49.

### <Upper Bracket 41 >

The upper bracket 41 connects a front portion of the right upper frame 42R and a front portion of the left upper frame 42L to the link supporting portion 212. The upper bracket 41 is a monolithic metallic member that is formed through casting. The upper bracket 41 is welded to a rear surface of an upper portion of the link supporting portion 212. Two insertion holes 41ar, 41al are provided in a rear portion of the upper bracket 41 so as to open to the rear. The front portion of the right upper frame 42R and the front portion of the left upper frame 42L are welded to the upper bracket 41 while being inserted into the corresponding insertion holes 41ar, 41al, respectively.

### <Link Supporting Portion 212>

The link supporting portion 212 is a member that extends in the up-and-down direction of the body frame 21. The link supporting portion 212 is provided ahead of a front end of the right frame 40R and a front end 40LF of the left frame 40L. In this embodiment, a frontmost portion of a portion that is exposed to an exterior of the right lower frame 43R that is formed of a pipe member is called the front end of the right frame 40R. A frontmost portion of a portion that is exposed to an exterior of the left lower frame 43R that is formed of a pipe member is called the front end 40LF of the left frame 40L. The link supporting portion 212 is connected to the right upper frame 42R and the left upper frame 42L via the upper bracket 41. The link supporting portion 212 is connected to the right lower frame 43R and the left lower frame 43L via the connecting bracket 70.

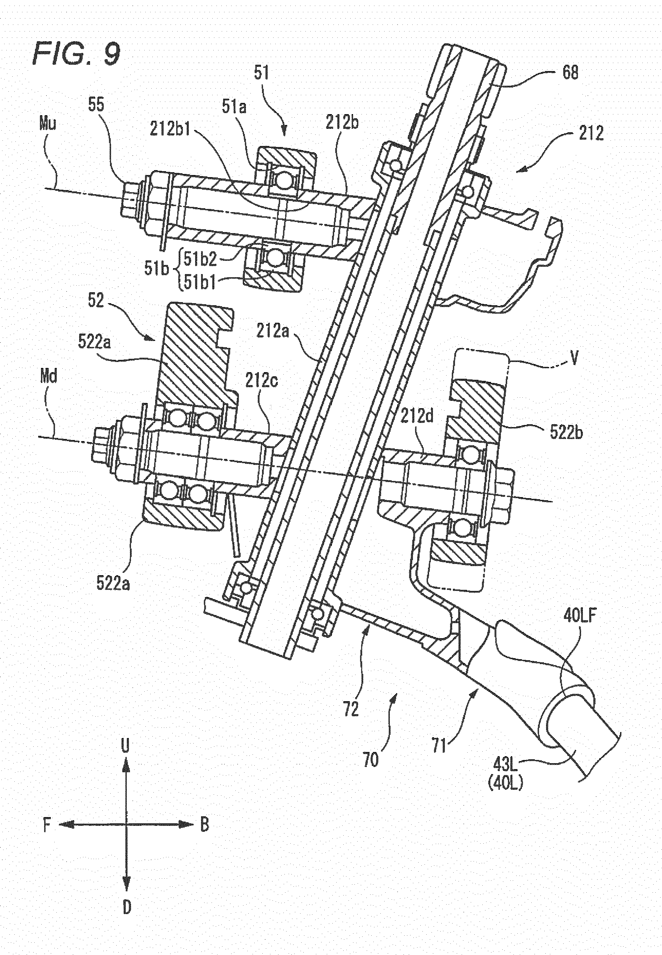

Fig. 9 is a sectional view of the link supporting portion 212. As shown in Fig. 9, the link supporting portion 212 supports the middle portion of the upper cross member 51 and the middle portion of the lower cross member 52 so as to turn. The downstream side steering shaft 68 is inserted into an interior of a main pipe portion 212a. The link supporting portion 212 has the main pipe portion 212a. An upper boss portion 212b, a lower front boss portion 212c and a lower rear boss portion 212d (an example of a turning supporting portion) are provided on the main pipe portion 212a.

The upper boss portion 212b is provided at a front portion of an upper portion of the link supporting portion 212. The upper boss portion 212b extends from a front surface of the link supporting portion 212 to the front in the front-and-rear direction of the body frame 21 along the middle upper axis Mu. The upper boss portion 212b is a cylindrical metallic part. The upper boss portion 212b is welded to a front portion of an upper portion of the main pipe portion 212a.

A threaded hole is provided in the upper boss portion 212b, so that a fastening bolt 55 (an example of a shaft portion) that supports the upper cross member 51 so as to turn is inserted thereinto. A through hole 51a is provided in the middle portion of the upper cross member 51. A bearing 51b is provided in this through hole 51a. An outer ring 51b1 of the first bearing 51b is fixed to the upper cross member 51. The fastening bolt 55 is inserted into an inner ring 51b2 of the bearing 51b. The fastening bolt 55 is screwed into a threaded hole 212b1 of the upper boss portion 212b. A ring-shaped front surface of the upper boss portion 212b is in a surface contact with a rear surface of the inner ring 51b2 of the bearing 51b. The inner ring 51b2 of the bearing 51b is pressed against the upper boss portion 212b by tightening the fastening bolt 55 to thereby be fixed to the upper boss portion 212b. The upper cross member 51 turns relative to the upper boss portion 212b as a result of the inner ring 51 b2 and the outer ring 51b1 of the bearing 51b turning relative to each other.

The lower front boss portion 212c is provided at a front portion of a lower portion of the link supporting portion 212. The lower front boss portion 212c extends from the front surface of the link supporting portion 212 to the front in the front-and-rear direction of the body frame 21 along the middle lower axis Md. The lower front boss portion 212c is formed of a cylindrical metallic member. The lower front boss portion 212c is welded to a front portion of a lower portion of the main pipe portion 212a. Similar to the upper boss portion 212b, the lower front boss portion 212c supports the lower front cross element 522a of the lower cross member 52 so as to turn.

The lower rear boss portion 212d (the example of the turning supporting portion) makes up a portion of the connecting bracket 70. The lower rear boss portion 212d is welded to a rear portion of the lower portion of the link supporting portion 212. The lower rear boss portion 212d extends to the rear along the middle lower axis Md in the front-and-rear direction of the body frame 21. Similar to the upper boss portion 212b, the lower rear boss portion 212d supports the lower rear cross element 522b of the lower cross member 52 so as to turn.

### <Connecting Bracket 70>

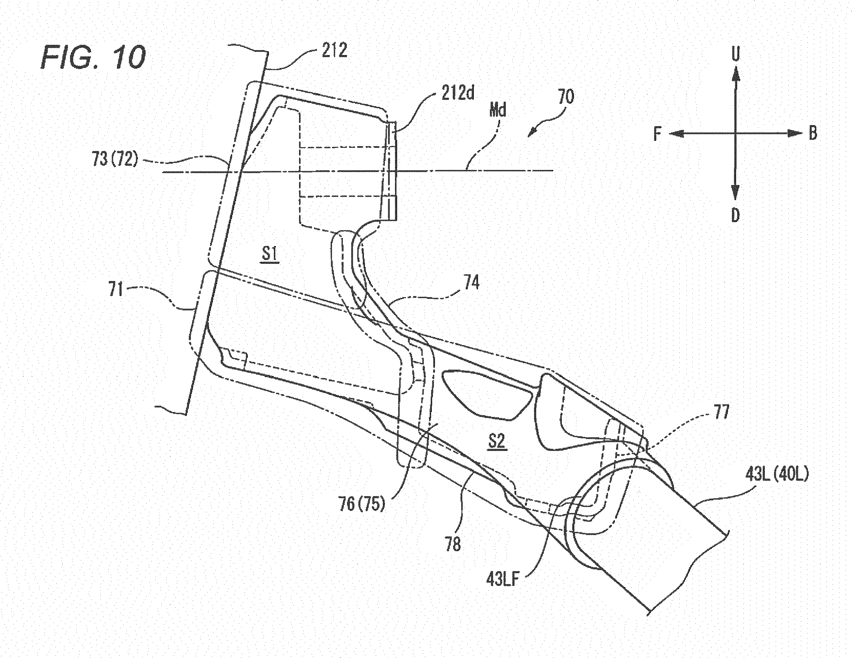

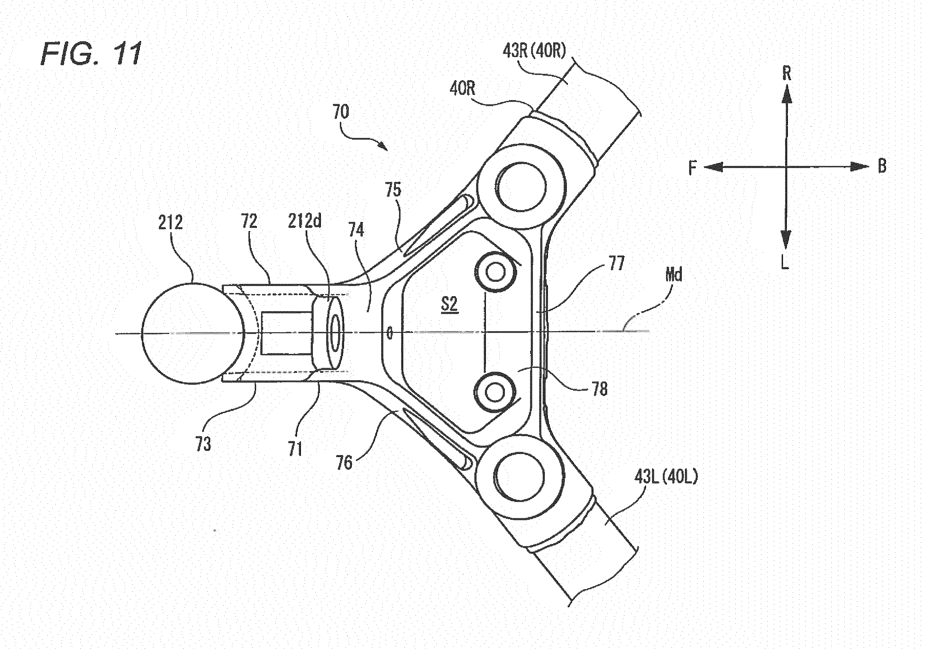

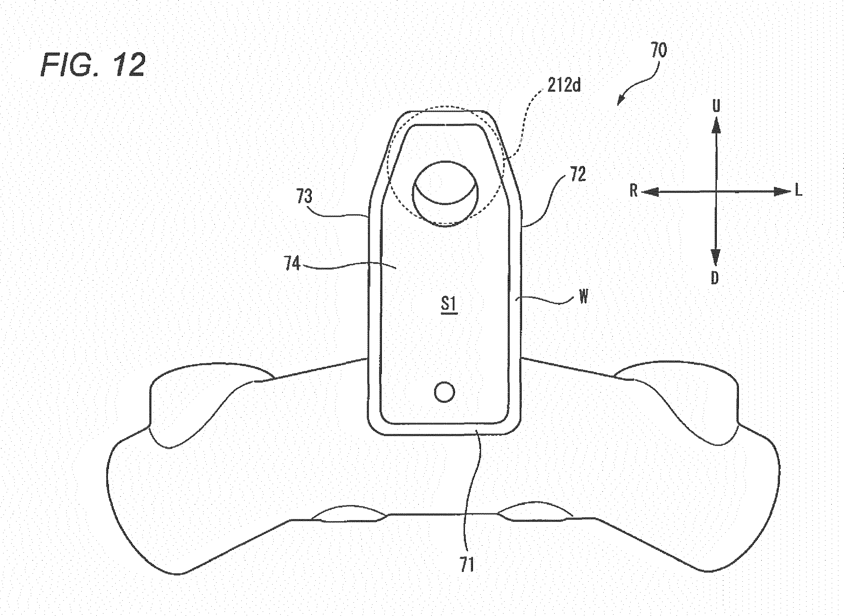

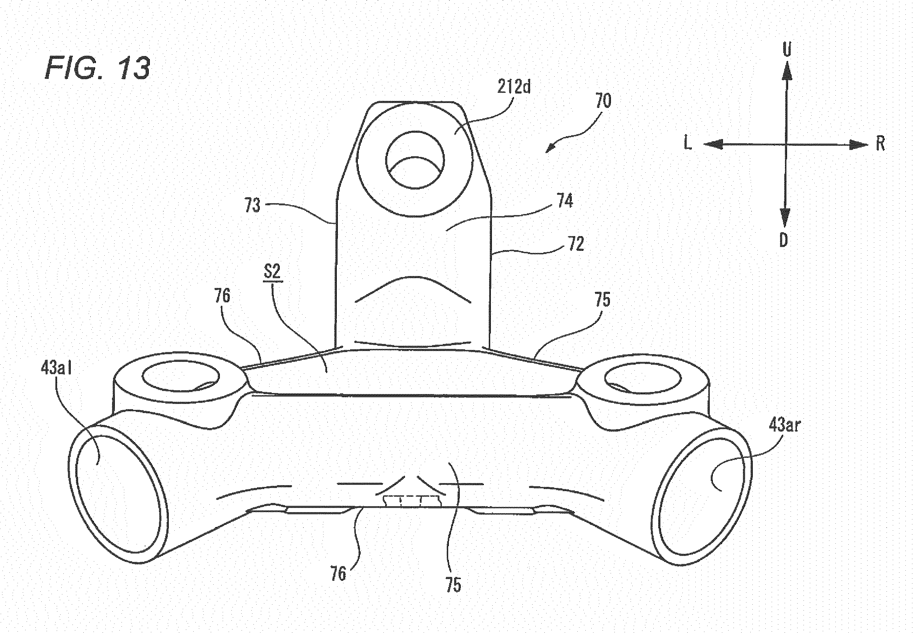

As shown in Fig. 8, the connecting bracket 70 connects the front portion of the right lower frame 43R and the front portion of the left lower frame 43L to the link supporting portion 212. The connecting bracket 70 is provided below the upper bracket 41. The connecting bracket 70 will be described in detail by using Figs. 10 to 13. Fig. 10 is a side view of the connecting bracket 70. Fig. 11 is a top view of the connecting bracket 70. Fig. 12 is a front view of the connecting bracket 70. Fig. 13 is a rear view of the connecting bracket 70.

As shown in Figs. 10 and 11, the connecting bracket 70 has the lower rear boss portion 212d, a connecting portion 71, a right reinforcement wall portion 72 and a left reinforcement wall portion 73. The connecting portion 71 connects the front portion of the right lower frame 43R and the front portion of the left lower frame 43L to the link supporting portion 212. At least a portion of the connecting portion 71 is situated below the lower rear boss portion 212d in the up-and-down direction of the body frame 21. In this embodiment, the connecting portion 71 constitutes a portion that extends in the front-and-rear direction. A front end of the connecting portion 71 is welded to a rear portion of the link supporting portion 212. A rear end of the connecting portion 71 is welded to the front portion of the right lower frame 43R and the front portion of the left lower frame 43L.

As has been described above, the lower rear boss portion 212d supports the lower cross member 52 so as to turn about the middle lower axis Md. A front portion of the lower rear boss portion 212d is welded to the rear portion of the link supporting portion 212. A rear surface of the lower rear boss portion 212d is machined into a flat surface. A threaded hole is opened in the rear surface, so that a fastening bolt that supports the lower cross member 52 so as to turn is inserted thereinto.

As shown in Fig. 10, the right reinforcement wall portion 72 extends in the up-and-down direction so as to connect the lower rear boss portion 212d and the connecting portion 71 together. The left reinforcement wall portion 73 extends in the up-and-down direction so as to connect the lower rear boss portion 212d to the connecting portion 71 together. As shown in Fig. 11, the right reinforcement wall portion 72 is connected to a right portion of the lower rear boss portion 212d. At least a portion of the right reinforcement wall portion 72 is provided on the right of the middle lower axis Md of the lower rear boss portion 212d. The left reinforcement wall portion 73 is connected to a left portion of the lower rear boss portion 212d. At least a portion of the left reinforcement wall portion 73 is provided on the left of the middle lower axis Md of the lower rear boss portion 212d.

The connecting bracket 70 is a monolithic part that is fabricated by methods including a lost wax or other casting process, a skiving process and the like. The connecting bracket 70 is a monolithic part including the lower rear boss portion 212d, the connecting portion 71, the right reinforcement wall portion 72 and the left reinforcement wall portion 73. When referred to here, the monolithic part means a mode of a part in which the lower rear boss portion 212d, the connecting portion 71, the right reinforcement wall portion 72 and the left reinforcement wall portion 73 are formed continuously of a common material. When referred to here, the monolithic mode does not include a configuration in which the lower rear boss portion 212d, the connecting portion 71, the right reinforcement wall portion 72 and the left reinforcement wall portion 73 are fabricated as separate parts which are then connected together in an integrated fashion with connecting means such as screws.

The connecting bracket 70 can be fabricated through casting. For example, molten metal is poured into a mold. This can substantially fabricate the connecting bracket 70. After the connecting bracket 70 has been fabricated in this way, the rear surface of the lower rear boss portion 212d which requires a particularly accurate machining precision is machined to be cut, thereby making it possible to obtain the connecting bracket 70. The connecting bracket 70 can be fabricated of, for example, cast iron, aluminum alloy, magnesium alloy and the like. The connecting bracket 70 may be fabricated only through casting by devising a mold. Alternatively, when a connecting bracket 70 of a complex shape is fabricated, the lost wax process or the like may be used. Additionally, the connecting bracket 70 may be fabricated only through cutting without using the casting process.

According to the vehicle 1 of this embodiment, the lower rear boss portion 212d is formed as the connecting bracket 70 that is monolithic with the connecting portion 71 that is connected with the right lower frame 43R and the left lower frame 43L. Due to this, part of torsional moment inputted into the lower rear boss portion 212d can be transmitted to the right lower frame 43R and the left lower frame 43L by way of the connecting bracket 70. Namely, the torsional moment that is transmitted from the lower rear boss portion 212d to the link supporting portion 212 is reduced. This serves to reduce stress that is inputted into the welding portion between the link supporting portion 212 and the lower rear boss portion 212d.

Further, the lower rear boss portion 212d, the connecting portion 71, the right reinforcement wall portion 72 and the left reinforcement wall portion 73 are integrated into the single monolithic part. This allows torsional moment that is inputted into the lower rear boss portion 212d to be dispersed onto to the welding portion between the lower rear boss portion 212d and the link supporting portion 212 and also to the right reinforcement wall portion 72 and the left reinforcement wall portion 73 that are provided on the right and left of the lower rear boss portion 212d, respectively, to be eventually transmitted to the link supporting portion 212. This reduces stress that is concentrated on the welding portion between the lower rear boss portion 212d and the link supporting portion 212.

The stress concentrated on the welding portion between the lower rear boss portion 212d and the link supporting portion 212 can be reduced from the reasons described above, and therefore, it becomes easy to ensure a sufficient connecting strength between the lower rear boss portion and the link supporting portion without using the large diameter link supporting portion by forming the lower rear boss portion into the shape of a frustum of circular cone as done in Non-Patent Document 1. This makes it difficult for the link supporting portion 212 to be enlarged in diameter, thereby suppressing the enlargement in size of the vehicle 1. It should be noted that a lower rear boss portion having the shape of a frustum of circular cone like the one in Non-Patent Document 1 may be adopted for the lower rear boss portion 212d in the vehicle 1 of this embodiment.

In the vehicle 1 of this embodiment, the lower rear boss portion 212d supports the lower cross member 52 so as to turn as shown in Fig. 8. The right reinforcement wall portion 72 and the left reinforcement wall portion 73 connect the connecting portion 71 provided below the lower rear boss portion 212d and the lower rear boss portion 212d together.

In many occasions, torsional force inputted into the lower cross member 52 is greater than torsional force inputted into the upper cross member 51. Although great torsional force is inputted from the lower cross member 52 to the link supporting portion 212, the vehicle 1 of this embodiment can reduce stress that is inputted into the welding portion between the link supporting portion 212 and the lower rear boss portion 212d. This suppresses the enlargement in diameter of the lower portion of the link supporting portion 212, thereby making it possible to suppress the enlargement in size of the vehicle 1.

In the vehicle 1 of this embodiment, the rear portion of the right reinforcement wall portion 72 and the rear portion of the left reinforcement wall portion 73 are connected at the rear reinforcement wall portion 74 as shown in Figs. 11 and 13. An upper end of the rear reinforcement wall portion 74 is connected to the lower rear boss portion 212d. The rear reinforcement wall portion 74 is also connected to the connecting portion 71. This rear reinforcement wall portion 74 also makes up part of the monolithic connecting bracket 70. The connection of the rear portion of the right reinforcement wall portion 72and the rear portion of the left reinforcement wall portion 73 by the rear reinforcement wall portion 74 enhances the strength of the connecting bracket 70.

In the vehicle 1 of this embodiment, the rear reinforcement wall portion 74 is monolithic with the connecting bracket 70. The rear reinforcement wall portion 74 is formed so as to make up part of the connecting bracket 70. As shown in Figs. 10 and 12, a first space S1 that opens forward is formed by the lower rear boss portion 212d, the right reinforcement wall portion 72, the left reinforcement wall portion 73, the rear reinforcement wall portion 74 and the connecting portion 71. A welding portion W between the connecting bracket 70 and the link supporting portion 212 is provided to surround the first space S1 as shown in Fig. 12 so that the opening of the first space S1 is closed by the link supporting portion 212.

In the vehicle 1 according to the preferred embodiment, forming the first space S1 in the connecting bracket 70 reduces the weight thereof. In addition, providing the welding portion W so as to surround the opening of the first space S1 can ensure the large welding area, thereby making it easy to enhance the welding strength between the connecting bracket 70 and the link supporting portion 212.

In the vehicle 1 of this embodiment, the lower cross member 52 has the lower front cross element 522a provided ahead of the link supporting portion 212 and the lower rear cross element 522b provided behind the link supporting portion 212 and connected to the lower front cross element 522a as shown in Fig. 9. The lower rear boss portion 212d supports the lower rear cross element 522b so as to turn about the middle lower axis Md.

In many occasions, torsional force inputted into the lower cross member 52 is greater than torsional force inputted into the upper cross member 51. Although great torsional force is inputted from the lower cross member 52 to the link supporting portion 212, the vehicle 1 of this embodiment can reduce stress that is inputted into the welding portion between the link supporting portion 212 and the lower rear boss portion 212d. This suppresses the enlargement in diameter of the lower portion of the link supporting portion 212, thereby making it possible to suppress the enlargement in size of the vehicle 1.

In the vehicle 1 of this embodiment, the main frame 40 has the right frame 40R that extends in at least the front-and-rear direction of the vehicle 1 and the left frame 40L that extends in at least the front-and-rear direction of the vehicle 1 and positioned on the left of the right frame 40R in the left-and-right direction of the vehicle 1.

In this embodiment, as shown in Fig. 11, the right reinforcement wall portion 72 is positioned on the left of the front end of the right frame 40R in the left-and-right direction of the vehicle 1. The left reinforcement wall portion 73 is positioned on the right of the front end of the left frame 40L in the left-and-right direction of the vehicle 1.

It is made more difficult for a part that is disposed near the upper cross member 51 to interfere with the upper cross member 51 as the part is disposed nearer to the turning center of the upper cross member 51. It is made more difficult for a part that is disposed near the lower cross member 52 to interfere with the lower cross member 52 as the part is disposed nearer to the turning center of the lower cross member 52. The right reinforcement wall portion 72 that lies nearer to the upper cross member 51 and the lower cross member 52 than the front end of the right frame 40R in the front-and-rear direction of the body frame 21 is positioned on the left of the front end of the right frame 40R. The left reinforcement wall portion 73 that lies nearer to the upper cross member 51 and the lower cross member 52 than the front end of the left frame 40L in the front-and-rear direction of the body frame 21 is positioned on the right of the front end of the left frame 40L. According to the vehicle 1 of the preferred embodiment, the right reinforcement wall portion 72 and the left reinforcement wall portion 73 can be disposed so as to lie near the upper cross member 51 and the lower cross member 52 while avoiding the interference with the upper cross member 51 and the lower cross member 52, thereby making it easy to suppress the enlargement in size of the vehicle 1.

In the vehicle 1 of this embodiment, the rear portion of the right reinforcement wall portion 72 and the rear portion of the left reinforcement wall portion 73 are connected at the rear reinforcement wall portion 74. As shown in Figs. 10, 11 and 13, the connecting portion 71 has a right wall portion 75 that connects the front portion of the right frame 40R and the right reinforcement wall portion 72 together, a left wall portion 76 that connects the front portion of the left frame 40L and the left reinforcement wall portion 73 together, a rear wall portion 77 that connects the front portion of the right frame 40R and the front portion of the left frame 40L together, and a lower wall portion 78 that connects a lower portion of the right wall portion 75 , a lower portion of the left wall portion 76 and a lower portion of the rear wall portion 77 together. A second space S2 that opens upwards is formed by the rear reinforcement wall portion 74, the right wall portion 75, the left wall portion 76, the rear wall portion 77 and the lower wall portion 78. It should be noted that the connecting portion 71 may have an upper wall portion that connects an upper portion of the right wall portion 75, an upper portion of the left wall portion 76 and an upper portion of the rear wall portion 77 together in place of the lower wall portion 78. As this occurs, a second space S2 that opens downwards is formed by the rear reinforcement wall portion 74, the right wall portion 75, the left wall portion 76, the rear wall portion 77 and the upper wall portion.

According to the vehicle 1 of this embodiment, forming the second space S2 in the connecting bracket 70 can reduce the weight thereof.

In the vehicle 1 of this embodiment, as shown in Fig. 11, a front portion of the right wall portion 75 is positioned on the left of a rear portion thereof and a front portion of the left wall portion 76 is positioned on the right of a rear portion thereof, when the vehicle 1 is seen from thereabove.

According to the vehicle 1 of the preferred embodiment, the right reinforcement wall portion 72 and the left reinforcement wall portion 73 can be disposed so as to lie near the upper cross member 51 or the lower cross member 52 while avoiding the interference with the upper cross member 51 or the lower cross member 52, thereby making it easy to suppress the enlargement in size of the vehicle 1.

In the vehicle 1 of this embodiment, as shown in Fig. 8, the right frame 40R has the right upper frame 42R that extends in at least the front-and-rear direction of the vehicle 1 and the right lower frame 43R that is provided below the right upper frame 42R and that extends in at least the front-and-rear direction of the vehicle 1. The left frame 40L has the left upper frame 42L that extends in at least the front-and-rear direction of the vehicle 1 and the left lower frame 43L that is provided below the left upper frame 42L and that extends in at least the front-and-rear direction of the vehicle 1. The front portion of the right upper frame 42R and the front portion of the left upper frame 42L are connected to the upper portion of the link supporting portion 212 by way of the upper bracket 41.

The upper bracket 41 has the right upper insertion hole 41ar into which the front portion of the right upper frame 42R is inserted and the left upper insertion hole 41al into which the front portion of the left upper frame 42L is inserted. As shown in Fig. 13, the connecting bracket 70 has a right lower insertion hole 70ar into which the front portion of the right lower frame 43R is inserted and a left lower insertion hole 70al into which the front portion of the left lower frame 43L is inserted. As shown in Fig. 8, the upper bracket 41 and the connecting bracket 70 are connected together by a right vertical connecting frame 47 that extends in the up-and-down direction of the body frame 21 and a left vertical connecting frame 48 that extends in the up-and-down direction of the body frame 21 and that is provided on the left of the right vertical connecting frame 47.

According to the vehicle 1 of the preferred embodiment, the connecting strength of the upper bracket 41 and the connecting bracket 70 is enhanced by the right vertical connecting frame 47 and the left vertical connecting frame 48, thereby making it easy to fix relative positions thereof to the right upper insertion hole 41ar, the left upper insertion hole 41al, the right lower insertion hole 70ar and the left lower insertion hole 70al. This enhances the working efficiency in inserting the respective front portions of the frames into the corresponding insertion holes.

Frames extending in the up-and-down direction such as the right vertical connecting frame 47 and the left vertical connecting frame 48 that are provided directly behind the link supporting portion 212 are preferable as members for bearing torsional force that is inputted into the link supporting portion. It has been studied in details the mechanism of torsional deformation of the link supporting portion 212 generated when different forces are inputted into the right front wheel and the left front wheel as will be described below and found out that the right vertical connecting frame 47 and the left vertical connecting frame 48 are preferable for suppressing the torsional deformation of the link supporting portion 212.

The following phenomenon is generated sometimes while riding on the vehicle 1 for the reason that the vehicle 1 rides over a step obliquely or the left and right front wheels pass road surfaces having different frictional coefficient µ when the brake is applied. For example, a greater resisting force is exerted on the right front wheel 32 than on the left front wheel 31, a clockwise force is exerted on the lower cross member 52 of the link mechanism 5 when seen from above, while a counterclockwise force is exerted on the upper cross member 51 when seen from above. The link supporting portion 212 supports the upper cross member 51 at the upper portion and supports the lower cross member 52 at the lower portion thereof. Due to this, a clockwise force is exerted on the lower portion of the link supporting portion 212 when seen from above and a counterclockwise force is exerted on the upper portion of the link supporting portion 212 when seen from above. Then, a counterclockwise force acting about an axis of the link supporting portion 212 when seen from above is exerted on the right upper frame 42R of the main frame 40 that is connected to the rear portion of the link supporting portion 212, while a clockwise force acting about the axis of the link supporting portion 212 when seen from above is exerted on the right lower frame 43R. The counterclockwise force acting about the axis of the link supporting portion 212 when seen from above is exerted on the left upper frame 42L, while the clockwise force acting about the axis of the link supporting portion 212 when seen from above is exerted on the left lower frame 43L. As this occurs, the main frame 40 deforms so that points situated away from the link supporting portion 212 move away from each other when seen from above. For example, the rear portion of the right upper frame 42R is displaced rightwards, while the rear portion of the right lower frame 43R is displaced leftwards. Similarly, for example, the rear portion of the left upper frame 42L is displaced rightwards, while the rear portion of the left lower frame 43L is displaced leftwards. When the main frame 40 deforms in this way, a torsional deformation is generated in the link supporting portion 212. The greater the displacement amount of the main frame 40, the greater the torsional deformation amount of the link supporting portion 212. It has been found out that suppressing the displacement amount of the main frame 40 can suppress the torsional displacement amount of the link supporting portion 212.

Then, in this embodiment, the right vertical connecting frame 47 suppresses a relative displacement between the right upper frame 42R and the right lower frame 43r of the main frame 40. The left vertical connecting frame 48 suppresses a relative displacement between the left upper frame 42L and the left lower frame 43L of the main frame 40.

Further, the right vertical connecting frame 47 is connected to the upper bracket 41 and the connecting bracket 70 that connect the front portion of the right upper frame 42R and the front portion of the right lower frame 43R together in a position lying behind the link mechanism 5. Namely, the right vertical connecting frame 47 is provided in the position lying relatively near the link supporting portion 212 behind the link mechanism 5. Similarly, the left vertical connecting frame 48 is connected to the upper bracket 41 and the connecting bracket 70 that connect the front portion of the left upper frame 42L and the front portion of the left lower frame 43L together in a position lying behind the link mechanism 5. Namely, the left vertical connecting frame 48 is provided in the position lying relatively near the link supporting portion 212 behind the link mechanism 5.

The right vertical connecting frame 47 and the left vertical connecting frame 48 that suppress the deformation of the main frame 40 are provided in the positions lying near the link supporting portion 212 that constitute an original point from which the deformation of the main frame 40 is originated. This enables the right vertical connecting frame 47 and the left vertical connecting frame 48 to suppress the torsional deformation of the link supporting portion 212 effectively.

For suppression of the torsional deformation of the link supporting portion 212, the following constructions (1) to (3) may be used alone or in combination in place of the aforesaid right vertical connecting frame 47 and left vertical connecting frame 48. According to the following constructions (1) to (3), the deformation of the main frame 40 described above can be suppressed. (1) A connecting frame provided behind the link mechanism 5 for connecting the right upper frame 42R and the left lower frame 43L together. The deformation of the main frame 40 described above is suppressed by suppressing a relative displacement between the right upper frame 42R and the left lower frame 43L. (2) A connecting frame provided behind the link mechanism 5 for connecting the left upper frame 42L and the right lower frame 43R together. The deformation of the main frame 40 described above is suppressed by suppressing a relative displacement between the left upper frame 42L and the right lower frame 43R. (3) A frame provided behind the link mechanism 5 for connecting the right upper frame 42R and the right lower frame 43R together and the left upper frame 42L and the left lower frame 43L together. The deformation of the main frame 40 described above is suppressed by suppressing a relative displace between the right upper frame 42R and the right lower frame 43R and a relative displacement between the left upper frame 42L and the left lower frame 43L.

In the embodiment described above, the connecting bracket 70 is described as being welded to the cylindrical link supporting portion. Alternatively, the portion made up by the link supporting portion and lying below the lower front boss portion and the lower rear boss portion may be configured as part of the connecting bracket 70.

In the embodiment described above, the lower rear boss portion 212d is described as being the turning supporting portion. The turning supporting portion is a portion that is connected to the link supporting portion 212 and that supports at least one of the upper cross member 51 and the lower cross member 52 so as to turn about the middle upper axis Mu or the middle lower axis Md. For example, one end portion of the shaft member may be fixed to the lower cross member 52 and the inner ring of the bearing may be fixed to the other end portion of the shaft member. As this occurs, the turning supporting portion constitutes a portion having a hole portion into which the outer ring of the bearing is inserted.

In the embodiment described above, the turning supporting portion 212d is described as supporting the lower cross member 52. Alternatively, the turning supporting portion may be the upper boss portion 212b that supports the upper cross member 51 so as to turn about the middle upper axis Mu.

In the embodiment described above, the connecting portion 71 is described as lying below the lower rear boss portion 212d. Alternatively, a configuration may be adopted in which the connecting portion lies above the lower rear boss portion 212d. Alternatively, with the turning supporting portion being the upper boss portion 212b, the turning supporting portion may be positioned above the upper boss portion 212b or the turning supporting portion may be positioned below the upper boss portion 212b.

In the embodiment described above, the vehicle 1 is described as having the body frame having the right frame and the left frame. Alternatively, the vehicle may be made up of a vehicle like a scooter-type vehicle having a body frame having a down tube that passes through a lateral center of the vehicle 1. The present teaching can be applied to both a vehicle having a scooter-type body frame and a vehicle having a rigid engine-type body frame.

In the embodiment described above, the right frame 40R and the left frame 40L are described as supporting the engine unit 25 and the rear bracket 49 as vehicle mounted parts. Alternatively, the right frame 40R and the left frame 40L may be configured so as to support a pivot arm link device of a swing unit for the rear wheel, a fuel tank, a suspension device for supporting the rear wheel and the like as vehicle mounted parts.

In the embodiment described above, the upper cross member 51 has the upper front cross element that is disposed ahead of the link supporting portion 212 but does not have a cross element that is disposed behind the link supporting portion 212. The lower cross member 52 has the lower front cross element that is disposed ahead of the link supporting portion 212 and the lower rear cross element that is disposed behind the link supporting portion 212. Alternatively, the upper cross member 51 may have the upper front cross element disposed ahead of the link supporting portion 212 and a cross element disposed behind the link supporting portion 212, and the lower cross member 52 may have the lower front cross element disposed ahead of the link supporting portion 212 and the lower rear cross element disposed behind the link supporting portion 212. Alternatively, the upper cross member 51 may have a single cross element disposed ahead of or behind the link supporting portion 212, and the lower cross member 52 may have a single cross element disposed ahead of or behind the link supporting portion 212.

In the embodiment described above, the left shock absorbing device 33 and the right shock absorbing device 34 each include the pair of telescopic mechanisms. However, depending upon the specification of the vehicle 1, the number of telescopic mechanisms that the left shock absorbing device 33 and the right shock absorbing device 34 include individually may be one.

In the embodiment described above, in the left shock absorbing device 33, the left outer tube is described as being situated above the left inner tube and the left front wheel 31 is described as being supported rotatably at the lower portion of the left inner tube, and in the right shock absorbing device 34, the right outer tube is described as being situated above the right inner tube and the right front wheel 32 is described as being supported rotatably at the lower portion of the right inner tube. Alternatively, in the left shock absorbing device, the left inner tube may be situated above the left outer tube and the left front wheel may be supported rotatably at the lower portion of the left outer tube, and in the right shock absorbing device, the right inner tube may be situated above the right outer tube and the right front wheel may be supported rotatably at the lower portion of the right outer tube.

In the embodiment described above, while the left shock absorbing device 33 is described as being positioned on the left side of the left front wheel 31, and the right shock absorbing device 34 is described as being positioned on the right side of the right front wheel 32. Alternatively, the left shock absorbing device 33 may be situated on the right of the left front wheel 31, and the right shock absorbing device 34 may be situated on the left of the right front wheel 32.

In the embodiment described above, while the engine unit 25 is described as supporting the rear wheel 4 so as to oscillate. Alternatively, the engine unit and the rear wheel may be both supported on the body frame so as to oscillate.

In the embodiment described above, the vehicle 1 includes the single rear wheel 4. However, the number of rear wheels may be plural.

In the embodiment described above, the center of the rear wheel 4 in relation to the left-and-right direction of the body frame 21 coincides with the center of the distance defined between the left front wheel 31 and the right front wheel 32 in relation to the left-and-right direction of the body frame 21. Although the configuration described above is preferable, the center of the rear wheel 4 in relation to the left-and-right direction of the body frame 21 may not coincide with the center of the distance defined between the left front wheel 31 and the right front wheel 32 in relation to the left-and-right direction of the body frame 21.

In the embodiment described above, the link mechanism 5 includes the upper cross member 51 and the lower cross member 52. However, the link mechanism 5 may include a cross member other than the upper cross member 51 and the lower cross member 52. The "upper cross member" and the "lower cross member" are merely so called based on their relative positional relationship in the up-and-down direction. The upper cross member is not intended to imply an uppermost cross member in the link mechanism 5. The upper cross member means a cross member that lies above a cross member that lies therebelow. The lower cross member is not intended to imply a lowermost cross member in the link mechanism 5. The lower cross member means a cross member that lies below another cross member that lies thereabove. At least one of the upper cross member 51 and the lower cross member 52 may be made up of two members of a right cross member and a left cross member. In this way, the upper cross member 51 and the lower cross member 52 may be made up of a plurality of cross members as long as they maintain the link function.

In the embodiment described heretofore, the link mechanism 5 makes up the parallel four joint link system. However, the link mechanism 5 may adopt a configuration using a double wishbone link system.

### [Description of Reference Numerals and Characters]

- 1: Vehicle
- 2: Vehicle main body portion
- 3: Front wheel
- 4: Rear wheel
- 5: Link mechanism
- 6: Steering force transmission mechanism
- 21: Body frame
- 22: Body cover
- 23: Handlebar
- 24: Seat
- 25: Engine unit
- 31: Left front wheel
- 32: Right front wheel
- 33: Left shock absorbing device (mechanism)
- 34: Right shock absorbing device (mechanism)
- 40L: Left frame
- 40LF: Front end of left frame
- 40R: Right frame
- 41: Upper bracket
- 41al: Left upper insertion hole
- 41ar: Right upper insertion hole
- 42L: Left upper frame
- 42R: Right upper frame
- 43L: Left lower frame
- 43R: Right lower frame
- 43LF: Front end of left lower frame
- 43b: Second left fastening hole
- 44b: First left fastening hole
- 44L: Left engine supporting portion
- 45L: Left vertical frame
- 45R: Right vertical frame
- 47: Right vertical connecting frame
- 48: Left vertical connecting frame
- 49: Rear bracket
- 51: Upper cross member
- 51a: Through hole
- 51b: Bearing
- 51b1: Outer ring
- 51b2: Inner ring
- 52: Lower cross member
- 53: Left side member
- 54: Right side member
- 55: Fastening bolt
- 60: Upstream side steering shaft
- 61: Middle transmission plate
- 62: Left transmission plate
- 63: Right transmission plate
- 64: Middle joint
- 65: Left joint
- 66: Right joint
- 67: Tie-rod
- 68: Downstream side steering shaft
- 70: Connecting bracket
- 71: Connecting portion
- 72: Right reinforcement wall portion
- 73: Left reinforcement wall portion
- 74: Rear reinforcement wall portion
- 75: Right wall portion
- 76: Left wall portion
- 77: Rear wall portion
- 78: Lower wall portion
- 80: Connecting member
- 211: headpipe
- 212: Link supporting portion
- 212a: Main pipe portion
- 212b: Upper boss portion
- 212c: Lower front boss portion
- 212d: Lower rear boss portion (turning supporting portion)
- 221: Front cover
- 223: Front fender
- 224: Rear fender
- 311: left axle member
- 317: Left bracket
- 321: Right axle member
- 327: Right bracket
- 331: Left front telescopic element
- 332: Left rear telescopic element
- 333: Left front outer tube
- 334: left front inner tube
- 335: Left rear outer tube
- 336: left rear inner tube
- 337: Left inner connecting element
- 341: Right front telescopic element
- 342: Right rear telescopic element
- 343: Right front outer tube
- 344: Right front inner tube
- 345: Right rear outer tube
- 346: Right rear inner tube
- 347: Right inner connecting element
- 512: Plate member
- 522a: Lower front cross element
- 522b: Lower rear cross element
- 523a: Left connecting block
- 523b: Right connecting block
- a: Rear steering axis
- b: Front steering axis
- X: Left steering axis
- Y: Right steering axis
- Z: Middle steering axis
- c: Left extension and contraction axis
- d: Right extension and contraction axis
- Md: Middle lower axis
- Mu: Middle upper axis
- S1: First space
- S2: Second space

## Claims

1. A vehicle having:
a body frame (21) configured to lean to the right of the vehicle when the vehicle turns to the right and lean to the left of the vehicle when the vehicle turns to the left;
a right front wheel (32) configured to turn about a right steering axis (Y) that extends in an up-and-down direction of the body frame (21);
a left front wheel (31) provided on the left of the right front wheel (32) in a left-and-right direction of the body frame (21) and configured to turn about a left steering axis (X) that is parallel to the right steering axis (Y);
a right shock absorbing mechanism (34) supporting the right front wheel (32) at a lower portion and configured to absorb a displacement of the right front wheel (32) towards an upper portion thereof in the up-and-down direction of the body frame (21);
a left shock absorbing mechanism (33) supporting the left front wheel (31) at a lower portion and configured to absorb a displacement of the left front wheel (31) towards an upper portion thereof in the up-and-down direction of the body frame (21); and
a link mechanism (5) supporting the right front wheel (32) and the left front wheel (31) so as to be displaced relative to each other in the up-and-down direction of the body frame (21),
wherein the link mechanism (5) has:
a right side member (54) supporting an upper portion of the right shock absorbing mechanism (34) so as to turn about the right steering axis (Y);
a left side member (53) supporting an upper portion of the left shock absorbing mechanism (33) so as to turn about the left steering axis (X);
an upper cross member (51) supporting an upper portion of the right side member (54) at a right end portion thereof so as to turn about a right upper axis that extends in a front-and-rear direction of the body frame (21) and an upper portion of the left side member (53) at a left end portion thereof so as to turn about a left upper axis that is parallel to the right upper axis and supported on the body frame (21) at a middle portion thereof so as to turn about a middle upper axis (Mu) that is parallel to the right upper axis and the left upper axis; and
a lower cross member (52) supporting a lower portion of the right side member (54) at a right end portion thereof so as to turn about a right lower axis that is parallel to the right upper axis and a lower portion of the left side member (53) at a left end portion thereof so as to turn about a left lower axis that is parallel to the left upper axis and supported on the body frame (21) at a middle portion thereof so as to turn about a middle lower axis (Md) that is parallel to the middle upper axis (Mu),
wherein the body frame (21) has:
a main frame (40) extending in at least a front-and-rear direction of the vehicle for supporting a part (25, 49) that is to be mounted on the vehicle;
a link supporting portion (212) provided ahead of the main frame (40) in relation to the front-and-rear direction of the vehicle for supporting the upper cross member (51) and the lower cross member (52) so as to turn, wherein a front portion of the main frame (40) and the link supporting portion (212) are connected together; and
a turning supporting portion (212d) connected to the link supporting portion (212) for supporting at least one of the upper cross member (51) and the lower cross member (52) so as to turn about the middle upper axis (Mu) or the middle lower axis (Md), **characterized by**
a connecting bracket (70) configured as a monolithic part that is fabricated by casting process and configured to connect the front portion of the main frame (40) and the link supporting portion (212) together,
the connecting bracket (70) including the turning supporting portion (212d), a connecting portion (71), a right reinforcement wall portion (72) and a left reinforcement wall portion (73) is the monolithic part, wherein
the connecting portion (71) is configured to connect the front portion of the main frame (40) comprising, a front portion of the right lower frame (43R) and a front portion of the left lower frame (43L) to the link supporting portion (212) by at least a portion thereof above or below the turning supporting portion (212d) in the up-and-down direction of the body frame (21) and at least a portion thereof situated below the lower rear boss portion (212d) in the up-and-down direction of the body frame (21), and
the right reinforcement wall portion (72) and the left reinforcement wall portion (73) are provided on the right and left of a center axis of the turning supporting portion (212d), respectively, at least portions thereof in the left-and-right direction of the body frame (21) and extend in the up-and-down direction so as to connect the turning supporting portion (212d) and the connecting portion (71) together, a front end of the connecting portion (71) is welded to a rear portion of the link supporting portion (212), a rear end of the connecting portion (71) is welded to the front portion of the right lower frame (43R) and the front portion of the left lower frame (43L).

2. The vehicle according to claim 1, **characterized in that** the turning supporting portion (212d) supports the lower cross member (52) so as to turn, and
wherein the right reinforcement wall portion (72) and the left reinforcement wall portion (73) connect the connecting portion (71) that is provided below the turning supporting portion (212d) to the turning supporting portion (212d) together.

3. The vehicle according to claim 1 or 2, **characterized in that** a rear portion of the right reinforcement wall portion (72) and a rear portion of the left reinforcement wall portion (73) are connected together at a rear reinforcement wall portion (74).

4. The vehicle according to claim 3, **characterized in that** the rear reinforcement wall portion (74) is monolithic with the connecting bracket (70), and
wherein a first space (S1) that opens forwards is formed by the turning supporting portion (212d), the right reinforcement wall portion (72), the left reinforcement wall portion (73), the rear reinforcement wall portion (74) and the connecting portion (71), and a welding portion (W) between the connecting bracket (70) and the link supporting portion (212) is provided to surround an opening of the first space (S1) in such a way that the opening of the first space (S1) is closed by the link supporting portion (212).

5. The vehicle according to any one of claims 1 to 4, **characterized in that** the lower cross member (52) has a lower front cross element (522a) provided ahead of the link supporting portion (212) and a lower rear cross element (522b) provided behind the link supporting portion (212) and connected to the lower front cross element (522a), and
wherein the turning supporting portion (212d) supports the lower rear cross element (522b) so as to turn about the middle lower axis (Md).

6. The vehicle according to any one of claims 1 to 5, wherein the main frame (40) has:a right frame (40R) extending in at least the front-and-rear of the vehicle; and a left frame (40L) extending in at least the front-and-rear direction of the vehicle and positioned on the left of the right frame (40R) in a left-and-right direction of the vehicle,wherein the right reinforcement wall portion (72) is positioned on the left of a front end of the right frame (40R) in the left-and-right direction of the vehicle, and wherein the left reinforcement wall portion (73) is positioned on the right of a front end of the left frame (40L) in the left-and-right direction of the vehicle.

7. The vehicle according to claim 6, **characterized in that** the rear portion of the right reinforcement wall portion (72) and the rear portion of the left reinforcement wall portion (73) are connected by the rear reinforcement wall portion (74),
the connecting portion (71) has:
a right wall portion (75) connecting a front portion of the right frame (40R) and the right reinforcement wall portion (72) together;
a left wall portion (76) connecting a front portion of the left frame (40L) and the left reinforcement wall portion (73) together;
a rear wall portion (77) connecting the front portion of the right frame (40R) and the front portion of the left frame (40L) together; and
a lower wall portion (78) connecting a lower portion of the right wall portion (75), a lower portion of the left wall portion (76) and a lower portion of the rear wall portion (77) together or an upper wall portion connecting an upper portion of the right wall portion (75), an upper portion of the left wall portion (76) and an upper portion of the rear wall portion (77) together, and
wherein a second space (S2) that opens upwards or downwards is formed by the rear reinforcement wall portion (74), the right wall portion (75), the left wall portion (76), the rear wall portion (77) and the lower wall portion (78) or the upper wall portion.

8. The vehicle according to claim 7, **characterized in that** a front portion of the right wall portion (75) is positioned on the left of a rear portion thereof, and a front portion of the left wall portion (76) is positioned on the right of a rear portion thereof when the vehicle is seen from thereabove.

9. The vehicle according to any one of claims 6 to 8, **characterized in that** the right frame (40R) has:
a right upper frame (42R) extending in at least the front-and-rear direction of the vehicle; and
a right lower frame (43R) provided below the right upper frame (42R) and extending in the front-and-rear direction of the vehicle,
wherein the left frame (40L) has:
a left upper frame (42L) extending in at least the front-and-rear direction of the vehicle; and
a left lower frame (43L) provided below the left upper frame (42L) and extending in the front-and-rear direction of the vehicle,
wherein a front portion of the right upper frame (42R) and a front portion of the left upper frame (42L) are connected to an upper portion of the link supporting portion (212) via an upper bracket (41),
wherein the upper bracket (41) has a right upper insertion hole (41ar) into which the front portion of the right upper frame (42R) is inserted and a left upper insertion hole (41al) into which a front portion of the left upper frame (42L) is inserted,
wherein the connecting bracket (70) has a right lower insertion hole (70ar) into which a front portion of the right lower frame (43R) is inserted and a left lower insertion hole (70al) into which a front portion of the left lower frame (43L) is inserted, and
wherein the upper bracket (41) and the connecting bracket (70) are connected together by a right vertical connecting frame (47) extending in the up-and-down direction of the body frame (21) and a left vertical connecting frame (48) extending in the up-and-down direction of the body frame (21) and provided on the left of the right vertical connecting frame (47).

## Patentansprüche

1. Ein Fahrzeug, das aufweist:
einen Körper-Rahmen (21), der konfiguriert ist, sich nach rechts von dem Fahrzeug zu neigen, wenn das Fahrzeug rechts abbiegt, und sich nach links von dem Fahrzeug zu neigen, wenn das Fahrzeug nach links abbiegt;
ein rechtes Vorder-Rad (32), das konfiguriert ist, um sich um eine rechte Lenk-Achse (Y) zu drehen, die sich in einer Oben-und-Unten-Richtung von dem Körper-Rahmen (21) erstreckt;
ein linkes Vorder-Rad (31), das links von dem rechten Vorder-Rad (32) vorgesehen ist, in einer Links-und-Rechts-Richtung von dem Körper-Rahmen (21), und konfiguriert ist, um sich um eine linke Lenk-Achse (X) zu drehen, die parallel zu der rechten Lenk-Achse (Y) ist;
einen rechten Stoß-Dämpf-Mechanismus (34), der das rechte Vorder-Rad (32) an einem unteren Abschnitt lagert, und konfiguriert ist, um eine Verlagerung von dem rechten Vorder-Rad (32) zu einem oberen Abschnitt desselben, in der Oben-und-Unten-Richtung von dem Körper-Rahmen (21), zu absorbieren;
einen linken Stoß-Dämpf-Mechanismus (33), der das linke Vorder-Rad (31) an einem unteren Abschnitt lagert und konfiguriert ist, um eine Verlagerung von dem linken Vorder-Rad (31) zu einem oberen Abschnitt desselben, in der Oben-und-Unten-Richtung von dem Körper-Rahmen (21), zu absorbieren; und
einen Lenker-Mechanismus (5), der das rechte Vorder-Rad (32) und das linke Vorder-Rad (31) lagert, sodass diese relativ zueinander, in der Oben-und-Unten-Richtung von dem Körper-Rahmen (21), verlagert sind,
wobei der Lenker-Mechanismus (5) aufweist:
ein Rechts-Seiten-Element (54), das einen oberen Abschnitt von dem rechten Stoß-Dämpf-Mechanismus (34) lagert, sodass es um die rechte Lenk-Achse (Y) dreht;
ein Links-Seiten-Element (53), das einen oberen Abschnitt von dem linken Stoß-Dämpf-Mechanismus (33) lagert, sodass es um die linke Lenk-Achse (X) dreht;
ein oberes Quer-Element (51), das einen oberen Abschnitt von dem Rechts-Seiten-Element (54) an einem Rechts-End-Abschnitt desselben lagert, sodass es um eine Rechts-Oben-Achse dreht, die sich in einer Vorder-und-Rück-Richtung von dem Körper-Rahmen (21) erstreckt, und ein oberer Abschnitt von dem Links-Seiten-Element (53) an einem Links-Endabschnitt desselben lagert, sodass es um eine Links-Oben-Achse dreht, die parallel zu der Rechts-Oben-Achse ist, und an dem Körper-Rahmen (21) an einem Mittel-Abschnitt desselben gelagert ist, sodass es um eine Mittel-Oben-Achse (Mu) dreht, die parallel zu der Rechts-Oben-Achse und der Links-Oben-Achse ist; und
ein unteres Quer-Element (52), das einen unteren Abschnitt von dem Rechts-Seiten-Element (54) an einem Rechts-End-Abschnitt desselben lagert, sodass es um eine Rechts-Unten-Achse dreht, die parallel zu der Rechts-Oben-Achse ist, und einen unteren Abschnitt von dem Links-Seiten-Element (53) an einem Links-Endabschnitt desselben lagert, sodass es um eine Links-Unten-Achse dreht, die parallel zu der Links-Oben-Achse ist, und an dem Körper-Rahmen (21) an einem Mittel-Abschnitt desselben gelagert ist, sodass es um eine Mittel-Unten-Achse (Md) dreht, die parallel zu der Mittel-Oben-Achse (Mu) ist,
wobei der Körper-Rahmen (21) aufweist:
einen Haupt-Rahmen (40), der sich in zumindest einer Vorder-und-Rück-Richtung von dem Fahrzeug erstreckt, um ein Teil (25, 49) zu lagern, das an dem Fahrzeug zu montieren ist;
einen Lenker-Lagerungs-Abschnitt (212), der vor dem Haupt-Rahmen (40) vorgesehen ist, in Bezug auf die Vorder-und-Rück-Richtung von dem Fahrzeug, zum Lagern des oberen Quer-Elements (51) und des unteren Quer-Elements (52), sodass diese drehen, wobei ein Vorder-Abschnitt von dem Haupt-Rahmen (40) und der Lenker-Lagerungs-Abschnitt (212) miteinander verbunden sind; und
einen Dreh-Lagerungs-Abschnitt (212d), der mit dem Lenker-Lagerungs-Abschnitt (212) verbunden ist, zum Lagern zumindest einem von dem oberen Quer-Element (51) und dem unteren Quer-Element (52), sodass es um die Mittel-Oben-Achse (Mu) oder die Mittel-Unten-Achse (Md) dreht,
**gekennzeichnet durch**
eine Verbindungs-Klammer (70), die als ein monolithischer Teil konfiguriert ist, der durch einen Gießprozess hergestellt ist, und konfiguriert ist, um den Vorder-Abschnitt von dem Haupt-Rahmen (40) und den Lenker-Lagerungs-Abschnitt (212) miteinander zu verbinden,
die Verbindungs-Klammer (70), die den Dreh-Lagerungs-Abschnitt (212d), einen Verbindungs-Abschnitt (71), einen rechten Verstärkungs-Wand-Abschnitt (72) und einen linken Verstärkungs-Wand-Abschnitt (73) beinhaltet, ist ein monolithischer Teil, wobei
der Verbindungs-Abschnitt (71) konfiguriert ist, um den Vorder-Abschnitt von dem Haupt-Rahmen (40), umfasst, einen Vorder-Abschnitt von dem rechten unteren Rahmen (43R) und einen Vorder-Abschnitt von dem linken unteren Rahmen (43L) mit dem Lenker-Lagerungs-Abschnitt (212) zu verbinden, durch zumindest einem Teil desselben oberhalb oder unterhalb des Dreh-Lagerungs-Abschnitts (212d) in der Oben-und-Unten-Richtung von dem Körper-Rahmen (21) und zumindest einen Teil desselben, gelegen unterhalb des unteren hinteren Naben-Abschnitts (212d) in der Oben-und-Unten-Richtung von dem Körper-Rahmen (21), und
der rechte Verstärkungs-Wand-Abschnitt (72) und der linke Verstärkungs-Wand-Abschnitt (73) sind jeweils rechts und links von einer Mittel-Achse von dem Dreh-Lagerungs-Abschnitt (212d) vorgesehen, zumindest Abschnitte derselben in der Links-und-Rechts-Richtung von dem Körper-Rahmen (21), und erstrecken sich in die Oben-und-Unten-Richtung, sodass sie den Dreh-Lagerungs-Abschnitt (212d) und den Verbindungs-Abschnitt (71) miteinander verbinden, ein Vorder-Ende von dem Verbindungs-Abschnitt (71) ist an einem Rück-Abschnitt von dem Lenker-Lagerungs-Abschnitt (212) verschweißt, ein Rück-Ende von dem Verbindungs-Abschnitt (71) ist an dem Vorder-Abschnitt von dem rechten unteren Rahmen (43R) und dem Vorder-Abschnitt von dem linken unteren Rahmen (43L) verschweißt.

2. Das Fahrzeug gemäß Anspruch 1, **dadurch gekennzeichnet, dass** der Dreh-Lagerungs-Abschnitt (212d) das untere Quer-Element (52) lagert, sodass es dreht, und
wobei der rechte Verstärkungs-Wand-Abschnitt (72) und der linke Verstärkungs-Wand-Abschnitt (73) den Verbindungs-Abschnitt (71), der unterhalb des Dreh-Lagerungs-Abschnitt (212d) vorgesehen ist, mit dem Dreh-Lagerungs-Abschnitt (212d) zusammen verbindet.

3. Das Fahrzeug gemäß Anspruch 1 oder 2, **dadurch gekennzeichnet, dass** ein Rück-Abschnitt von dem rechten Verstärkungs-Wand-Abschnitt (72) und ein Rück-Abschnitt von dem linken Verstärkungs-Wand-Abschnitt (73) an einem hinteren Verstärkungs-Wand-Abschnitt (74) verbunden sind.

4. Das Fahrzeug gemäß zu Anspruch 3, **dadurch gekennzeichnet, dass** der hintere Verstärkungs-Wand-Abschnitt (74) monolithisch mit der Verbindungs-Klammer (70) ist, und
wobei ein erster Raum (S1), der sich nach vorne öffnet, durch den Dreh-Lagerungs-Abschnitt (212d), den rechten Verstärkungs-Wand-Abschnitt (72), den linken Verstärkungs-Wand-Abschnitt (73), den hinteren Verstärkungs-Wand-Abschnitt (74) und den Verbindungs-Abschnitt (71) ausgebildet ist, und ein Schweiß-Abschnitt (W) zwischen der Verbindungs-Klammer (70) und dem Lenker-Lagerungs-Abschnitt (212) vorgesehen ist, um eine Öffnung von dem ersten Raum (S1) in so einer Weise zu umgeben, dass die Öffnung von dem ersten Raum (S1) durch den Lenker-Lagerungs-Abschnitt (212) verschlossen ist.

5. Das Fahrzeug gemäß zu irgendeinem der Ansprüche 1 bis 4, **dadurch gekennzeichnet, dass** das untere Quer-Element (52) ein unteres Vorder-Quer-Element (522a), das vor dem Lenker-Lagerungs-Abschnitt (212) vorgesehen ist, und ein unteres Rück-Quer-Element (522b), das hinter dem Lenker-Lagerungs-Abschnitt (212) vorgesehen ist, und mit dem unteren Vorder-Quer-Element (522a) verbunden ist, hat, und
wobei der Dreh-Lagerungs-Abschnitt (212d) das untere Rück-Quer-Element (522b) lagert, sodass es um die Mittel-Unten-Achse (Md) dreht.

6. Das Fahrzeug gemäß zu irgendeinem der Ansprüche 1 bis 5, wobei der Haupt-Rahmen (40) aufweist: einen rechten Rahmen (40R), der sich in zumindest der Vorder-und-Rück-Richtung von dem Fahrzeug erstreckt; einen linken Rahmen (40L), der sich in zumindest der Vorder-und-Rück-Richtung von dem Fahrzeug erstreckt und links von dem rechten Rahmen (40R) in einer Links-und-Rechts-Richtung von dem Fahrzeug positioniert ist, wobei der rechte Verstärkungs-Wand-Abschnitt (72) links von einem Vorder-Ende von dem rechten Rahmen (40R), in der Links-und-Rechts-Richtung von dem Fahrzeug, positioniert ist, und wobei der linke Verstärkungs-Wand-Abschnitt (73) rechts von einem Vorder-Ende von dem linken Rahmen (40L), in der Links-und-Rechts-Richtung von dem Fahrzeug, positioniert ist.

7. Das Fahrzeug gemäß Anspruch 6, **dadurch gekennzeichnet, dass** der Rück-Abschnitt von dem rechten Verstärkungs-Wand-Abschnitt (72) und der Rück-Abschnitt von dem linken Verstärkungs-Wand-Abschnitt (73) durch den Rück-Verstärkungs-Wand-Abschnitt (74) verbunden sind,
der Verbindungs-Abschnitt (71) hat:
einen rechten Wand-Abschnitt (75), der einen Vorder-Abschnitt von dem rechten Rahmen (40R) und den rechten Verstärkungs-Wand-Abschnitt (72) miteinander verbinden;
einen linken Wand-Abschnitt (76), der einen Vorder-Abschnitt von dem linken Rahmen (40L) und den linken Verstärkungs-Wand-Abschnitt (73) miteinander verbindet;
einen Rück-Wand-Abschnitt (77), der den Vorder-Abschnitt von dem rechten Rahmen (40R) und den Vorder-Abschnitt von dem linken Rahmen (40L) zusammen verbindet; und
einen unteren Wand-Abschnitt (78), der einen unteren Abschnitt von dem rechten Wand-Abschnitt (75), einen unteren Abschnitt von dem linken Wand-Abschnitt (76) und einen unteren Abschnitt von dem Rück-Wand-Abschnitt (77) zusammen verbindet, oder einen oberen Wand-Abschnitt, der einen oberen Abschnitt von dem rechten Wand-Abschnitt (75) verbindet, einen oberen Abschnitt von dem linken Wand-Abschnitt (76) und einen oberen Abschnitt von dem Rück-Wand-Abschnitt (77) zusammen verbindet, und
wobei ein zweiter Raum (S2), der sich nach oben oder unten öffnet, durch den hinteren Verstärkungs-Wand-Abschnitt (74), den rechten Wand-Abschnitt (75), den linken Wand-Abschnitt (76), den Rück-Wand-Abschnitt (77) und den unteren Wand-Abschnitt (78) oder den oberen Wand-Abschnitt ausgebildet ist.

8. Das Fahrzeug gemäß Anspruch 7, **dadurch gekennzeichnet, dass** ein Vorder-Abschnitt von dem rechten Wand-Abschnitt (75) links von einem Rück-Abschnitt desselben positioniert ist, und ein Vorder-Abschnitt von dem linken Wand-Abschnitt (76) ist rechts von einem Rück-Abschnitt desselben positioniert, wenn das Fahrzeug von oben betrachtet ist.

9. Das Fahrzeug gemäß zu irgendeinem der Ansprüche 6 bis 8, **dadurch gekennzeichnet, dass** der rechte Rahmen (40R) hat:
einen rechten oberen Rahmen (42R), der sich in zumindest der Vorder-und-Rück-Richtung von dem Fahrzeug erstreckt; und
einen rechten unteren Rahmen (43R), der unterhalb des rechten oberen Rahmens (42R) vorgesehen ist, und sich in der Vorder-und-Rück-Richtung von dem Fahrzeug erstreckt,
wobei der linke Rahmen (40L) hat:
einen linken oberen Rahmen (42L), der sich in zumindest der Vorder-und-Rück-Richtung von dem Fahrzeug erstreckt; und
einen linken unteren Rahmen (43L), der unterhalb des linken unteren Rahmens (42L) vorgesehen ist, und sich in der Vorder-und-Rück-Richtung von dem Fahrzeug erstreckt,
wobei ein Vorder-Abschnitt von dem rechten oberen Rahmen (42R) und ein Vorder-Abschnitt von dem linkten oberen Rahmen (42L) mit einem oberen Abschnitt von dem Lenker-Lagerungs-Abschnitt (212) über eine obere Klammer (41) verbunden sind,
wobei die obere Klammer (41) ein rechtes oberes Einsetz-Loch (41ar), in das der Vorder-Abschnitt von dem rechten oberen Rahmen (42R) eingesetzt ist, und ein linkes oberes Einsetz-Loch (41al), in das ein Vorder-Abschnitt von dem linkten oberen Rahmen (42L) eingesetzt ist, hat,
wobei die Verbindungs-Klammer (70) ein rechtes unteres Einsetz-Loch (70ar), in das ein Vorder-Abschnitt von dem rechten unteren Rahmen (43R) eingesetzt ist, und ein linkes unteres Einsetz-Loch (70al), in das ein Vorder-Abschnitt von dem linken unteren Rahmen (43L) eingesetzt ist, hat, und
wobei die obere Klammer (41) und die Verbindungs-Klammer (70) zusammen durch einen rechten Vertikal-Verbindungs-Rahmen (47), der sich in der Oben-und-Unten-Richtung von dem Körper-Rahmen (21) erstreckt, und einen linken Vertikal-Verbindungs-Rahmen (48), der sich in der Oben-und-Unten-Richtung von dem Körper-Rahmen (21) erstreckt, und links von dem rechten Vertikal-Verbindungs-Rahmen (47) vorgesehen ist, verbunden sind.

## Revendications

1. Véhicule comportant :
un cadre (21) configuré pour pencher vers la droite du véhicule lorsque le véhicule tourne vers la droite et pour pencher vers la gauche du véhicule lorsque le véhicule tourne vers la gauche,
une roue avant droite (32) configurée pour tourner autour d'un axe de direction droit (Y) qui s'étend dans la direction haut bas du cadre (21),
une roue avant gauche (31) disposée sur la gauche de la roue avant droite (32) dans la direction gauche droite du cadre (21) et configurée pour tourner autour d'un axe de direction gauche (X) parallèle à l'axe de direction droit (Y),
un mécanisme droit d'absorption des chocs (34) supportant la roue avant droite (32) à sa partie inférieure et configuré pour absorber un déplacement de la roue avant droite (32) vers sa partie supérieure dans la direction haut bas du cadre (21),
un mécanisme droit d'absorption des chocs (33) supportant la roue avant gauche (31) à sa partie inférieure et configuré pour absorber un déplacement de la roue avant gauche (31) vers sa partie supérieure dans la direction haut bas du cadre (21), et
un mécanisme de liaison (5) supportant la roue avant droite (32) et la roue avant gauche (31) de sorte à ce qu'elles se déplacent l'une par rapport à l'autre dans la direction haut bas du cadre (21),
dans lequel le mécanisme de liaison (5) comporte :
un élément latéral droit (54) supportant la partie supérieure du mécanisme droit d'absorption des chocs (34) de sorte à tourner autour de l'axe de direction droit (Y),
un élément latéral gauche (53) supportant la partie supérieure du mécanisme gauche d'absorption des chocs (33) de sorte à tourner autour de l'axe de direction gauche (X),
un élément transversal supérieur (51) supportant la partie supérieure de l'élément latéral droit (54) à l'extrémité droite de celui-ci afin de tourner autour d'un axe supérieur droit qui s'étend dans la direction avant arrière du cadre (21), ainsi que la partie supérieure de l'élément latéral gauche (53) à l'extrémité gauche de celui-ci de sorte à tourner autour d'un axe supérieur gauche qui est parallèle à l'axe supérieur droit et qui est supporté sur le cadre (21) au milieu de celui-ci de sorte à tourner autour d'un axe supérieur médian (Mu) qui est parallèle à l'axe supérieur droit et à l'axe supérieur gauche, et
un élément transversal inférieur (52) supportant la partie inférieure de l'élément latéral droit (54) à l'extrémité droite de celui-ci afin de tourner autour d'un axe inférieur droit qui est parallèle à l'axe supérieur droit, ainsi que la partie inférieure de l'élément latéral gauche (53) à l'extrémité gauche de celui-ci de sorte à tourner autour d'un axe inférieur gauche qui est parallèle à l'axe supérieur gauche et qui est supporté sur le cadre (21) au milieu de celui-ci de sorte à tourner autour d'un axe inférieur médian (Md) qui est parallèle à l'axe supérieur médian (Mu),
dans lequel le cadre comporte :
un cadre principal (40) s'étendant dans la direction avant arrière du véhicule afin de supporter un composant (25, 49) qui doit être monté sur le véhicule,
un organe de support de liaison (212) prévu en avant du cadre principal (40) par rapport à la direction avant arrière du véhicule, destiné à supporter l'élément transversal supérieur (51) et l'élément transversal inférieur (52) de sorte à pivoter, la partie avant du cadre principal (40) et l'organe de support de liaison (212) étant reliés ensemble, et
un organe de support de rotation (212d) relié à l'organe de support de liaison (212) afin de supporter au moins l'un de l'élément transversal supérieur (51) et de l'élément transversal inférieur (52) de façon à tourner autour de l'axe supérieur médian (Mu) ou de l'axe inférieur médian (Md),
**caractérisé par**
un support de raccordement (70) configuré comme pièce monolithique qui est fabriquée par un processus de fonderie et configurée pour relier la partie avant du cadre principal (40) et l'organe de support de liaison (212),
le support de raccordement (70), incluant l'organe de support de rotation (212d), un organe de raccordement (71), une partie de paroi de renforcement droit (72) et une partie de paroi de renforcement gauche (73), représente la pièce monolithique, où
l'organe de raccordement (71) est configuré pour relier la partie avant du cadre principal (40) comprenant une partie avant du cadre inférieur droit (43R) et une partie avant du cadre inférieur gauche (43L) à l'organe de support de liaison (212) par au moins une partie de celui-ci au-dessus ou en-dessous de l'organe de support de rotation (212d) dans la direction haut bas du cadre, et au moins une partie de celui-ci située en dessous de la partie de bossage arrière inférieur (212d) dans la direction haut bas du cadre (21), et
la partie de paroi de renforcement droit (72) et la partie de paroi de renforcement gauche (73) sont respectivement disposées à la droite et à la gauche de l'axe central de l'organe de support de rotation (212d), au moins des parties de celui-ci dans la direction gauche droite du cadre (21), et elles s'étendent dans la direction haut bas de sorte à relier ensemble l'organe de support de rotation (212d) et l'organe de raccordement (71), l'extrémité avant de l'organe de raccordement (71) étant soudée à une partie arrière de l'organe de support de liaison (212), l'extrémité arrière de l'organe de raccordement (71) étant soudée à la partie avant du cadre inférieur droit (43R) et à la partie avant du cadre inférieur gauche (43L).

2. Véhicule selon la revendication 1, **caractérisé en ce que** l'organe de support de rotation (212d) soutient l'élément transversal inférieur (52) de sorte à pivoter, et
dans lequel la partie de paroi de renforcement droit (72) et la partie de paroi de renforcement gauche (73) relient à l'organe de support de rotation (212d) l'organe de raccordement (71) qui est disposé en dessous de l'organe de support de rotation (212d).

3. Véhicule selon la revendication 1 ou la revendication 2, **caractérisé en ce que** la partie arrière de la partie de paroi de renforcement droit (72) et la partie arrière de la partie de paroi de renforcement gauche (73) sont reliées ensemble au niveau d'une partie de paroi de renforcement arrière (74).

4. Véhicule selon la revendication 3, **caractérisé en ce que** la partie de paroi de renforcement arrière (74) ne fait qu'une pièce avec le support de raccordement (70), et
dans lequel un premier espace (S1) qui s'ouvre vers l'avant est formé par l'organe de support de rotation (212d), la partie de paroi de renforcement droit (72), la partie de paroi de renforcement gauche (73), la partie de paroi de renforcement arrière (74) et l'organe de raccordement (71), et une partie de soudage (W) entre le support de raccordement (70) et l'organe de support de liaison (212) est disposée pour entourer l'ouverture du premier espace (S1) de sorte à ce que l'ouverture du premier espace (S1) soit fermée par l'organe de support de liaison (212).

5. Véhicule selon l'une quelconque des revendications 1 à 4, **caractérisé en ce que** l'élément transversal inférieur (52) comporte un élément transversal avant inférieur (522a) disposé à l'avant de l'organe de support de liaison (212) ainsi qu'un élément transversal arrière inférieur (522b) disposé derrière l'organe de support de liaison (212) et relié à l'élément transversal avant inférieur (522a), et
dans lequel l'organe de support de rotation (212d) soutient l'élément transversal arrière inférieur (522b) de sorte à tourner autour de l'axe inférieur médian (Md).

6. Véhicule selon l'une quelconque des revendications 1 à 5, dans lequel le cadre principal (40) comporte : un cadre droit (40R) s'étendant dans au moins la direction avant arrière du véhicule et un cadre gauche (40L) s'étendant dans au moins la direction avant arrière du véhicule et positionné sur la gauche du cadre droit (40R) dans la direction gauche droite du véhicule, la partie de paroi de renforcement droit (72) étant positionnée sur la gauche de l'extrémité avant du cadre droit (40R) dans la direction gauche droite du véhicule, et la partie de paroi de renforcement gauche (73) étant positionnée sur la droite de l'extrémité avant du cadre gauche (40L) dans la direction gauche droite du véhicule.

7. Véhicule selon la revendication 6, **caractérisé en ce que** la partie arrière de la partie de paroi de renforcement droit (72) et la partie arrière de la partie de paroi de renforcement gauche (73) sont reliées par la partie de paroi de renforcement arrière (74),
l'organe de raccordement (71) comporte :
une partie de paroi droite (75) reliant la partie avant du cadre droit (40R) et la partie de paroi de renforcement droit (72),
une partie de paroi gauche (76) reliant la partie avant du cadre gauche (40L) et la partie de paroi de renforcement gauche (73),
une partie de paroi arrière (77) reliant la partie avant du cadre droit (40R) et la partie avant du cadre gauche (40L), et
une partie de paroi inférieure (78) reliant la partie inférieure de la partie de paroi droite (75), la partie inférieure de la partie de paroi gauche (76) et la partie inférieure de la partie de paroi arrière (77) ; ou bien une partie de paroi supérieure reliant la partie supérieure de la partie de paroi droite (75), la partie supérieure de la partie de paroi gauche (76) et la partie supérieure de la partie de paroi arrière (77), et
dans lequel un second espace (S2) qui s'ouvre vers le haut ou vers le bas est formé par la partie de paroi de renforcement arrière (74), la partie de paroi droite (75), la partie de paroi gauche (76), la partie de paroi arrière (77) et la partie de paroi inférieure (78) ou la partie de paroi supérieure.

8. Véhicule selon la revendication 7, **caractérisé en ce que** la partie avant de la partie de paroi droite (75) est positionnée sur la gauche de la partie arrière de celle-ci, et la partie avant de la partie de paroi gauche (76) est positionnée sur la droite de la parti arrière de celle-ci lorsque le véhicule est vu de dessus.

9. Véhicule selon l'une quelconque des revendications 6 à 8, **caractérisé en ce que** le cadre droit (40R) comporte :
un cadre supérieur droit (42R) s'étendant dans au moins la direction avant arrière du véhicule, et
un cadre inférieur droit (43R) disposé en dessous du cadre supérieur droit (42R) et s'étendant dans la direction avant arrière du véhicule,
dans lequel le cadre gauche (40L) comporte :
un cadre supérieur gauche (42L) s'étendant dans au moins la direction avant arrière du véhicule, et
un cadre inférieur gauche (43L) disposé en dessous du cadre supérieur gauche (42L) et s'étendant dans la direction avant arrière du véhicule,
dans lequel la partie avant du cadre supérieur droit (42R) et la partie avant du cadre supérieur gauche (42L) sont reliées à la partie supérieure de l'organe de support de liaison (212) par l'intermédiaire d'un support supérieur (41),
dans lequel le support supérieur (41) comporte un trou d'insertion supérieur droit (41ar) dans lequel est insérée la partie avant du cadre supérieur droit (42R), ainsi qu'un trou d'insertion supérieur gauche (41al) dans lequel est insérée la partie avant du cadre supérieur gauche (42L),
dans lequel le support de raccordement (70) comporte un trou d'insertion inférieur droit (70ar) dans lequel est insérée la partie avant du cadre inférieur droit (43R), ainsi qu'un trou d'insertion inférieur gauche (70al) dans lequel est insérée la partie avant du cadre inférieur gauche (43L), et
dans lequel le support supérieur (41) et le support de raccordement (70) sont reliés ensemble grâce à un cadre de raccordement vertical droit (47) s'étendant dans la direction haut bas du cadre (21) et par un cadre de raccordement vertical gauche (48) s'étendant dans la direction haut bas du cadre (21) et disposé sur la gauche du cadre de raccordement vertical droit (47).
